(19) Europäisches Patentamt
European Patent Office
Office européen des brevets

(11) **EP 3 526 268 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **17777213.4**

(22) Anmeldetag: **21.09.2017**

(51) Internationale Patentklassifikation (IPC):
**C08G 18/62** *(2006.01)*     **C08G 18/79** *(2006.01)*
**C09D 175/04** *(2006.01)*     **C08G 18/22** *(2006.01)*

(52) Gemeinsame Patentklassifikation (CPC):
**C08G 18/6229; C08G 18/225; C08G 18/227; C08G 18/792; C09D 175/04**

(86) Internationale Anmeldenummer:
**PCT/EP2017/073922**

(87) Internationale Veröffentlichungsnummer:
**WO 2018/069018 (19.04.2018 Gazette 2018/16)**

(54) **BESCHICHTUNGSMITTELSYSTEM BASIEREND AUF SALZEN EINER ALIPHATISCHEN MONOCARBONSÄURE**

COATING AGENT SYSTEM BASED ON SALTS OF AN ALIPHATIC MONOCARBOXYLIC ACID

SYSTÈME D'AGENT DE REVÊTEMENT À BASE DE SELS D'UN ACIDE MONOCARBOXYLIQUE ALIPHATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2016 EP 16193676**

(43) Veröffentlichungstag der Anmeldung:
**21.08.2019 Patentblatt 2019/34**

(73) Patentinhaber: **BASF Coatings GmbH**
**48165 Münster (DE)**

(72) Erfinder:
• **HOFFMANN, Peter**
**48165 Münster (DE)**
• **SCHNIER, Benedikt**
**48165 Münster (DE)**
• **LEVENT, Emre**
**48165 Münster (DE)**

(74) Vertreter: **BASF IP Association**
**BASF SE**
**GBI-C006**
**67056 Ludwigshafen (DE)**

(56) Entgegenhaltungen:
**WO-A1-2015/130939     WO-A1-2016/116586**
**WO-A1-2016/120160**

• **DATABASE WPI Week 200804 Thomson Scientific, London, GB; AN 2008-A53824 XP002766058, & JP 2007 246829 A (YOKOHAMA RUBBER CO LTD) 27. September 2007 (2007-09-27) in der Anmeldung erwähnt**

**Beschreibung**

Die Erfindung betrifft ein Beschichtungsmittelsystem, das die Komponenten (A) bis (C) sowie gegebenenfalls weitere Komponenten umfasst, wobei in einer ersten Option alle Komponenten (A) bis (C) sowie gegebenenfalls auch die weiteren optionalen Komponenten getrennt voneinander vorliegen, also die einzelnen Komponenten nicht miteinander vermischt sind. In einer zweiten Option des erfindungsgemäßen Beschichtungsmittelsystems können die vorgenannten Komponenten hingegen auch vollständig oder zumindest teilweise miteinander vermischt sein. Sofern die Komponenten zumindest teilweise miteinander vermischt sind, bedeutet dies, dass beispielsweise die Komponente (C) mit der Komponente (A) vermischt ist, während die Komponente (B) getrennt zu diesem Gemisch aus (A) und (C) vorliegt. Gegebenenfalls kann aber auch die Komponente (B) mit einer Teilmenge der Komponente (C) vermischt sein. Weiterhin können die Gemische aus (A) und (C) sowie aus (B) und (C) zusätzlich mindestens eine optionale Komponente wie beispielsweise ein Lösungsmittel enthalten.

Bei der Komponente (A) handelt es sich um mindestens eine polyhydroxygruppenhaltige Verbindung und bei der Komponente (B) handelt es sich um mindestens eine polyisocyanathaltige Verbindung, wobei die Säurezahl der polyhydroxygruppenhaltigen Verbindung gemäß Komponente (A) nicht mehr als 15 mg KOH/g der entsprechenden polyhydroxygruppenhaltigen Verbindung beträgt und wobei die polyhydroxygruppenhaltige Verbindung gemäß der Komponente (A) ausgewählt ist aus der Gruppe der Polyacrylatpolyole und/oder der Polymethacrylatpolyole. Die Komponente (C) ist hingegen ein Katalysator, der mindestens zwei Salze einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist, umfasst. Als weitere Komponenten können im erfindungsgemäßen Beschichtungsmittelsystem beispielsweise hydroxylgruppenhaltige Verbindungen (D), Lackadditive (F), Pigmente (H) und/oder Lösungsmittel (J) enthalten sein.

Ein weiterer Gegenstand der vorliegenden Erfindung ist somit auch ein Verfahren zur Herstellung von Polyurethanen, die durch Aushärtung des vorstehend beschriebenen Beschichtungsmittelsystems erhalten werden. "Aushärten" (Aushärtung) im Sinne der vorliegenden Erfindung bedeutet, dass die im erfindungsgemäßen Beschichtungsmittelsystem enthaltenen Komponenten (A) und (B) in Gegenwart des Katalysators gemäß Komponente (C) miteinander unter Ausbildung eines Polyurethans reagieren. Die Reaktion, also das Aushärten, kann dabei zumindest teilweise vonstatten gehen, vorzugsweise erfolgt jedoch ein vollständiges Aushärten, das heißt die im erfindungsgemäßen Beschichtungsmittelsystem enthaltenen Komponenten (A) und (B) reagieren vollständig oder nahezu vollständig miteinander ab.

Weitere Gegenstände der vorliegenden Erfindung sind somit auch Verfahren zur Herstellung des erfindungsgemäßen Beschichtungsmittelsystems. Weiterhin ist die Verwendung des erfindungsgemäßen Beschichtungsmittelsystems oder des Polyurethans, das aus dem erfindungsgemäßen Beschichtungsmittelsystem hergestellt wurde, beispielsweise als Lack, insbesondere als Klarlack oder als pigmentierter Lack, ein Gegenstand der vorliegenden Erfindung.

Ein weiterer Gegenstand der vorliegenden Erfindung ist ein Verfahren zur Erzeugung einer Beschichtung unter Verwendung des erfindungsgemäßen Beschichtungsmittelsystems sowie die Beschichtung als solche.

Ein weiterer Gegenstand der vorliegenden Erfindung ist die Verwendung des Katalysators gemäß Komponente (C) des erfindungsgemäßen Beschichtungsmittelsystems, beispielsweise zur Herstellung von Polyurethanen oder zur Herstellung eines Lacks.

Die Herstellung von Polyurethanen durch Umsetzung einer Verbindung, die mindestens zwei Hydroxylgruppen pro Molekül aufweist, mit einer Verbindung, die mindestens zwei Isocyanatgruppen pro Molekül aufweist, ist schon seit langem bekannt. In Abhängigkeit von der Reaktivität der jeweiligen Verbindungen ist es durchaus möglich, dass ein spontanes und/oder teilweises Aushärten (Reaktion der beiden Eduktkomponenten) bereits durch ein simples Vermischen der jeweiligen Eduktkomponenten erfolgen kann. Aus technischen Gründen soll aber die spontane Reaktion unterdrückt sein, damit eine sichere Handhabung gewährleistet ist. Um dann aber nach dem Vermischen und eine gewissen Latenzzeit die Reaktion ausreichend schnell ablaufen zu lassen, bedient man sich so genannter Katalysatoren.

Eine gezielte Herstellung des Polyurethans erfolgt jedoch in der Regel in Gegenwart eines geeigneten Katalysators. Aufgrund der Reaktivität der beiden Eduktkomponenten des Polyurethans ist es in der Praxis sehr weit verbreitet, dass die jeweiligen Eduktkomponenten getrennt voneinander bereitgestellt werden, wobei gegebenenfalls der Katalysator vorab zu dem hydroxylgruppenhaltige Edukt und/oder dem isocyanatgruppenhaltigen Edukt zugegeben werden kann. Solche Systeme sind in der Praxis unter dem Begriff "Zweikomponenten-(Polyurethan-)Systeme" (2K-Systeme) weitverbreitet und auch kommerziell erhältlich. Es sind auch Mehrkomponentensysteme mit mehr als zwei Komponenten denkbar, es kann sein, dass eine Komponente weder mit der einen noch der anderen Komponente verträglich ist und daher diese drei Komponenten erst direkt vor der Applikation zusammengeführt werden können.

Andererseits ist es auch möglich, einkomponentige Systeme (Gemische/1K-System) bereitzustellen, in denen beispielsweise durch Blockieren der reaktiven Gruppen der einzelnen Edukte, beispielsweise durch Blockierung der freien Isocyanatgruppen mit geeigneten Blockierungsmitteln, die beiden Eduktkomponenten und auch der Katalysator als lagerfähiges Gemisch bereitgestellt werden können. In den einzelnen Ausgangskomponenten bzw. gegebenenfalls im Ausgangsgemisch beim 1K-System sind in der Praxis häufig auch noch weitere Komponenten wie Lösungsmittel oder Lackadditive enthalten.

Ebenso ist es bekannt, dass Polyurethane als Lacke bzw. als Bestandteil von Lacken, beispielsweise bei der Automobilreparatur, ein breites Anwendungsgebiet haben. Das Polyurethan fungiert somit als Beschichtungsmittel. Die entsprechenden Formulierungen, die zumindest die Polyurethanedukte sowie einen geeigneten Katalysator und gegebenenfalls weitere Komponenten wie Lackadditive oder Lösungsmittel enthalten, werden auch als Beschichtungsmittelsystem oder Beschichtungsmittelzusammensetzung bezeichnet.

Polyurethan-Beschichtungsmittel enthalten also üblicherweise einen Katalysator, wobei neben sauren Verbindungen insbesondere tertiäre Amine und/oder Metallverbindungen, wie beispielsweise verschiedene Zinnverbindungen, insbesondere Dibutylzinndilaurat und Dibutylzinnoxid, zum Einsatz kommen.

Der Einsatz zinnhaltiger Katalysatoren ist aufgrund der vielen Alkyl-Zinnverbindungen innewohnenden Toxizität auch in Beschichtungsmitteln zu vermeiden. Von der "Working Group on Classification and Labelling" der EU-Kommission wurden Dibutylzinnoxid (DBTO) und Dibutylzinndilaurat (DBTL) entsprechend kategorisiert.

In dem Artikel "Replacing a veritable workhorse" im "European Coatings Journal" (Ausgabe: 07-08/2008; insgesamt 11 Seiten, Vincentz-Network) werden die Nachteile von zinnhaltigen Katalysatoren im Zusammenhang mit der Polyurethanherstellung beschrieben und stattdessen können Katalysatoren auf Basis von Bismut und/oder Zink eingesetzt werden.

In dem im Internet unter der Adresse www.wernerblank.com (Stand: 09. Oktober 2014) zugänglichen Artikel "Catalysis of the Isocyanate-Hydroxyl Reaction by Non-Tin Catalysts" von Werner J. Blank, Z. A. He und Ed. T. Hessell der Firma King Industries Inc. werden daher Alternativen zu den üblichen zinnhaltigen Katalysatoren auf Basis verschiedener Metallsalze und Metallkomplexe, wie Zirkoniumchelate, Aluminiumchelat und Bismutcarboxylat, beschrieben. Katalysatoren auf Basis von Gemischen von Bismut mit anderen Metallen werden hingegen nicht beschrieben.

US-A 5,011,902 offenbart eine Zusammensetzung zur Beschichtung von Sperrholzplatten, die ein nicht-zelluläres Polyurethan-Elastomer beinhaltet, das durch Reaktion eines Polyethers oder Polyesterpolyols mit einem Polyisocyanat in der Gegenwart eines Katalysators gewonnen wird. Der Katalysator enthält mindestens eine Bismutverbindung, kann darüber hinaus aber auch noch weitere Metalle, wie Zink, Antimon oder Lithium enthalten. Das Verhältnis von Bismut zu Lithium beträgt gegebenenfalls 1 : 6,6 bis 1 : 1,6.

In WO 2012/123198 A1 wird eine Beschichtungsmittelzusammensetzung beschrieben, die mindestens ein Polyol, ein Polyisocyanat, eine monomere aromatische, gegebenenfalls substituierte Carbonsäure (S), deren Carboxylgruppe in Konjugation zu einem $\pi$-Eiektronensystem steht, sowie als Katalysator einen Zink-Amidin-Komplex enthält. Keine Erwähnung findet dagegen ein bismuthaltiger Katalysator.

Ein weiteres Beschichtungsmittelsystem wird in WO 2016/120160 beschrieben, das auf mindestens einem Polyol, einem Polyisocyanat sowie einem Katalysator basiert. Der eingesetzte Katalysator enthält als Metallkomponenten Lithium und Bismut in einem molaren Verhältnis von mindestens 7:1.

Die Verwendung von Lithium (Li) als Metallkomponente in Katalysatoren ist jedoch ebenfalls mit einem Nachteil verbunden. Die Verfügbarkeit von ausreichenden Mengen Li wird aufgrund der stark steigenden Nutzung des Li beispielsweise für Stromspeichermaterialien derzeit stark in Frage gestellt. Alternativen zu Li als Co-Katalysatoren in Verbindung mit Bi-haltigen Katalysatoren sind deshalb ein Ausweg aus einer möglichen mangelnden Verfügbarkeit des Lithiums.

Ein sinngemäßes Beschichtungsmittelsystem wird in WO 2016/116586 offenbart, wobei bei diesem Beschichtungsmittelsystem das eingesetzte Polyol eine Säurezahl von nicht mehr als 9 mg KOH/g aufweist. Der eingesetzte Katalysator enthält als Metallkomponente Lithium sowie mindestens eine weitere Metallkomponente auswählt aus Zinn, Bismut, Zirkonium und/oder Aluminium.

EP-B 2 841 200 betrifft ein Verfahren zur Herstellung eines auf Polyisocyanat basierenden Polymers, wobei als Katalysator ein Bismutsalz eines Thiophosphonsäurediesters eingesetzt wird.

WO 2005/058996 beschreibt Katalysatoren und Verfahren zur Herstellung von Polyurethanen, wobei als Katalysator eine Mischung aus einer organischen Titan- oder organischen Zirkoniumverbindung und einer bismuthaltigen Verbindung, gegebenenfalls in Gegenwart eines Amins, eingesetzt wird.

WO 2015/130939 A1 offenbart eine Zusammensetzung und einen Prozess, um Polyisocyanurat- oder Polyurethanschäume mit verbesserten Dämmeigenschaften herzustellen. Die Zusammensetzung umfasst dabei mindestens ein Polyol, mindestens ein Isocyanat, mindestens ein Treibmittel sowie eine Katalysatorzusammensetzung.

Die Katalysatorzusammensetzung enthält mindestens einen Bismutcarboxylat-Katalysator sowie einen oder mehrere Co-Katalysatoren ausgewählt aus der Gruppe bestehend aus Alkalimetallcarboxylaten und quartären Ammoniumcarboxylaten.

JP 2007 246829 A betrifft ein Zweikomponenten-Polyurethan-System, das unter anderem als Klebe- und Dichtstoff verwendet werden kann. In einem ersten Schritt reagieren dabei eine Polyolkomponente und eine Polyisocyanatkomponente zu einem Polyurethanpräpolymer. In einem zweiten Schritt wird dieses Polyurethanpräpolymer unter Einsatz eines Organometall-Katalysators ausgehärtet.

Aufgabe der vorliegenden Erfindung war es daher, ein neues Beschichtungsmittelsystem bereitzustellen.

Die Aufgabe wird gelöst durch ein Beschichtungsmittelsystem umfassend die Komponenten (A) bis (C) mit

(A) mindestens einer polyhydroxygruppenhaltigen Verbindung, wobei die Säurezahl der polyhydroxygruppenhaltigen Verbindung gemäß Komponente (A) nicht mehr als 15 mg KOH/g der entsprechenden polyhydroxygruppenhaltigen Verbindung beträgt und wobei die polyhydroxygruppenhaltige Verbindung gemäß der Komponente (A) ausgewählt ist aus der Gruppe der Polyacrylatpolyole und/oder der Polymethacrylatpolyole,

(B) mindestens einer polyisocyanathaltigen Verbindung und

(C) als Katalysator mindestens zwei Salze einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist,

wobei

i) die Komponenten (A), (B) und (C) getrennt voneinander vorliegen oder

ii) vollständig oder zumindest teilweise miteinander vermischt sind.

Das erfindungsgemäße Beschichtungsmittelsystem zeichnet sich unter anderem dadurch aus, dass die Verwendung von toxischen zinnhaltigen Katalysatoren vermieden werden kann und/oder eine schnelle Härtung gewährleistet wird.

Besonders vorteilhaft ist die Verwendung von Katalysatoren gemäß der vorstehend definierten Komponente (C), die auf Salzen einer aliphatischen Monocarbonsäure mit mindestens vier Kohlenstoffatomen beruht, weil dadurch die Reaktionsgeschwindigkeit beim Aushärten, also bei Ausbildung des Polyurethans, zielgenau gesteuert werden kann. Dies kann über einen sehr breiten Temperaturbereich erzielt werden, beispielsweise beginnend bei Raumtemperatur (ab 15 °C) bis zu relativ hohen Temperaturen von 180 °C.

Weiterhin ist die Verwendung von Katalysatoren gemäß der vorstehend definierten Komponente (C) besonders vorteilhaft, weil die Reaktionsgeschwindigkeit des gesamten Beschichtungsmittelsystems bei der späteren Anwendung maßgeschneidert werden kann. So können je nach gewünschtem Anforderungsprofil für die gewünschte Lackapplikation niedrige oder hohe Temperaturen, gegebenenfalls ein längeres Potlife (Topfzeit) oder aber auch eine schnellere Härtung maßgeschneidert bereitgestellt werden. Unter Potlife (Topfzeit) wird erfindungsgemäß verstanden, wie lange das entsprechende Beschichtungsmittelsystem im gemischten Zustand gelassen werden kann, ohne dass Einbußen hinsichtlich der Qualität bei der entsprechenden Anwendung (Lackierungsschritt) beobachtet werden. Das Potlife wird über die Gelzeit bestimmt. Die besten Werte eines Potlife werden bei einer Gelzeit von ungefähr 20 erhalten.

Ein weiterer Vorteil des erfindungsgemäßen Beschichtungsmittelsystems ist darin zu sehen, dass eine vergleichbar gut funktionierende Alternative zu den prinzipiell gut funktionierenden, aber zunehmend teurer werdenden lithiumhaltigen Katalysatoren erhalten wird.

Die erfindungsgemäß eingesetzten Katalysatoren gemäß der Komponente (C) sind auch gegenüber mit Chelaten blockierten Katalysatoren, wie beispielsweise Acetylaceton (Derivate), vorteilhaft, weil die Chelate das jeweilige Metall zu stark komplexieren und somit die Katalyse zu einem zu frühen Zeitpunkt beenden oder zumindest stark reduzieren. Zudem sind diese chelatisierenden Verbindungen in der Lage, Spuren von Metallen aus den üblichen Weißblechdosen zu extrahieren und führen oft zu Vergilbung der Klarlacke nach Lagerung. Außerdem sind solche Chelate teilweise toxisch.

Durch die in dem erfindungsgemäßen Beschichtungsmittelsystem eingesetzten Katalysatoren gemäß Komponente (C) wird also eine zu schnelle Vernetzung unterbunden, sodass das Beschichtungsmittelsystem nach dem Vermischen der Komponenten (A) bis (C) für einen längeren Zeitraum einsatzfähig ist. Insbesondere bei der Niedrigtemperaturhärtung ist somit eine längere Verarbeitungszeit möglich, was einen ökonomischen Vorteil darstellt. Gleichzeitig kann aber eine schnelle Trocknung erzielt werden. Bisherige Katalysatoren erfüllen diese Anforderungen nicht.

Außerdem wurde überraschend festgestellt, dass die Beschichtungsmittelsysteme bei Verwendung von polyhydroxygruppenhaltigen Verbindungen, die Säurezahlen von nicht mehr als 15 mg KOH/g aufweisen, schneller aushärten als vergleichbare Beschichtungsmittelsysteme, die polyhydroxygruppenhaltige Verbindungen mit höheren Säurezahlen enthalten. Es wurde darüber hinaus festgestellt, dass die Beschichtungsmittelsysteme bei Verwendung von polyhydroxygruppenhaltigen Verbindungen, die Säurezahlen von nicht mehr als 15 mg KOH/g aufweisen, eine höhere Wasser- und damit Wetterbeständigkeit besitzen. Sie lagern bei Feuchtelagerung keine Feuchtigkeit ein und bleiben dadurch vor Weißanlaufen geschützt.

Ein weiterer Vorteil der erfindungsgemäßen Beschichtungsmittelsysteme ist in ihrer Verwendung für die Automobilreparaturlackierung und die Beschichtung von Nutzfahrzeugen zu sehen. Die erfindungsgemäßen Beschichtungsmittelsysteme gewährleisten eine gute Montagefestigkeit bereits nach sehr kurzer Zeit. Dadurch wird eine schnelle Aushärtung auch unter den Bedingungen der Reparaturlackierung und der Lackierung von Nutzfahrzeugen gewährleistet, also bereits nach Härtung von 30 min bei 60°C sind sie so weit ausgehärtet, dass erste Montagearbeiten oder Demaskierungen ohne Beschädigung der Beschichtung durchgeführt werden können

Im Rahmen der vorliegenden Erfindung ist unter den Begriffen "Bindemittelgehalt" oder "Bindemittelanteil" bzw. "Bindemittelgehaltbestimmung" (soweit nicht anders aufgeführt) Folgendes zur verstehen:

Der "Bindemittelgehalt" ist jeweils der in Tetrahydrofuran (THF) lösliche Anteil des Beschichtungsmittelsystems enthaltend die Komponenten (A) bis (C) sowie gegebenenfalls (D) bis (J). Der Bindemittelgehalt wird bestimmt, bevor die Aushärtung der Komponenten des Beschichtungsmittelsystems beginnt, also vor der Aushärtung unter Erhalt des Polyurethans. Dazu werden die einzelnen Komponenten des entsprechenden Beschichtungsmittelsystems vollständig miteinander vermischt und anschließend wird eine kleine Probe (P) von 1 g des Beschichtungsmittelsystems gewogen, in der 100-fachen Menge THF gelöst, unlösliche Bestandteile werden abfiltriert, das THF abgedampft und daran anschließend der so erhaltene Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

Nachfolgend werden das erfindungsgemäße Beschichtungsmittelsystem sowie die weiteren Gegenstände der vorliegenden Erfindung näher definiert.

Der erste Gegenstand der vorliegenden Erfindung ist das vorstehend bereits aufgeführte Beschichtungsmittelsystem, umfassend die Komponenten (A) bis (C) sowie gegebenenfalls eine weitere Komponente (D) bis (J).

Das erfindungsgemäße Beschichtungsmittelsystem enthält als Komponente (A) mindestens eine polyhydroxygruppenhaltige (polyhydroxylgruppenhaltige) Verbindung, wobei die Säurezahl der polyhydroxygruppenhaltigen Verbindung gemäß Komponente (A) nicht mehr als 15 mg KOH/g der entsprechenden polyhydroxygruppenhaltigen Verbindung beträgt und wobei die polyhydroxygruppenhaltige Verbindung gemäß der Komponente (A) ausgewählt ist aus der Gruppe der Polyacrylatpolyole und/oder der Polymethacrylatpolyole. Als polyhydroxygruppenhaltige Verbindung gemäß Komponente (A) können alle dem Fachmann bekannten Verbindungen eingesetzt werden, welche mindestens zwei Hydroxylgruppen pro Molekül aufweisen. Die Anzahl der Hydroxylgruppen

(Hydroxygruppen) pro Molekül kann beliebig hoch sein, sie wird über die Hydroxyzahl (OH-Zahl) festgelegt, wie nachfolgend beschrieben. Die Verbindungen gemäß Komponente (A) werden auch als "Polyole" bezeichnet, sie können oligomer und/oder polymer sein. Es können als Komponente (A) somit auch Mischungen von zwei oder mehr oligomerer und/oder polymerer Polyole (polyhydroxygruppenhaltige Verbindungen) eingesetzt werden.

Vorzugsweise weisen die polyhydroxygruppenhaltigen Verbindungen gemäß Komponente (A) massenmittlere Molekulargewichte Mw $\geq$ 500 Dalton, insbesondere $M_w \geq$ 1 000 Dalton, auf. Der $M_w$-Wert kann bestimmt werden mittels Gelpermeationschromatographie (GPC) gegen einen Polystyrolstandard (siehe auch nachfolgend im experimentellen Teil). Weiterhin bevorzugt sind massenmittlere Molekulargewichte $M_w$ zwischen 1 000 und 20 000 Dalton, insbesondere zwischen 1 500 und 10 000 Dalton.

Die Polyole weisen bevorzugt eine OH-Zahl von 30 bis 400 mg KOH/g (Polyol), insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz (Polyol) bei der Acetylierung (des entsprechenden Polyols mit Essigsäure) gebunden wird. Die Probe wird bei der Bestimmung mit Essigsäureanhydrid-Pyridin gekocht und die entstehende Säure mit Kaliumhydroxidlösung titriert (DIN 53240-2 (2007-11)). Im Falle reiner Poly-(Meth)-Acrylate kann die OH-Zahl auch durch Berechnung auf Basis der eingesetzten OH-funktionellen Monomere ausreichend genau bestimmt werden.

Erfindungsgemäß beträgt die Säurezahl der polyhydroxygruppenhaltigen Verbindung gemäß Komponente (A) nicht mehr als 15 mg KOH/g der entsprechenden polyhydroxygruppenhaltigen Verbindung.

Die Säurezahl gibt hierbei die Anzahl der mg Kaliumhydroxid an, die zur Neutralisation von 1 g der jeweiligen Verbindung (Polyol/polyhydroxygruppenhaltigen Verbindung) verbraucht wird (DIN EN ISO 2114:2006-11).

Die Glasübergangstemperaturen ($T_G$-Werte) der Polyole, gemessen mit Hilfe von DSC-Messungen nach DIN-EN-ISO 11357-2:2011-04-28, können beliebige Werte annehmen und liegen bevorzugt zwischen -150 und 150 °C, besonders bevorzugt zwischen 40 und 120 °C.

Die erfindungsgemäßen polyhydroxygruppenhaltigen Verbindungen (Polyole) sind ausgewählt aus der Gruppe der Polyacrylatpolyole und/oder

Polymethacrylatpolyole. Beispiele für solche Verbindungen sind aufgeführt in Poth Schwalm, Schwarz: Acrylatharze. Vincentz Verlag Hannover, ISBN: 9783866308718. Die vorgenannten Polymerklassen wie Polyacrylatpolyole oder Polymethacrylatpolyole können sämtlich jeweils als Homopolymer oder als Copolymer (Copolymerisat) von mindestens zwei unterschiedlichen Monomeren eingesetzt werden. Im Rahmen der vorliegenden Erfindung werden vorzugsweise Copolymere als polyhydroxygruppenhaltige Verbindungen, insbesondere in den vorgenannten Polymerklassen, eingesetzt. Die Polymerklassen basieren auf mindestens einem hydroxygruppenhaltigen Monomerbaustein. Für die jeweilige Polymerklasse geeignete Monomere (Monomerbausteine) sind dem Fachmann bekannt. Ebenso ist dem Fachmann bekannt, nach welchen konkreten (Polymerisations-)Verfahren die jeweiligen Polymere aus den entsprechenden Monomeren hergestellt werden können. Weiterhin können auch Gemische von mindestens zwei unterschiedlichen konkreten Polymeren einer Polymerklasse und/oder Gemische von jeweils mindestens einem konkreten Polymer aus mindestens zwei unterschiedlichen Polymerklassen vorliegen. Ebenso ist es möglich, dass so genannte Mischpolymerisate vorliegen, also Polymere, die Fragmente enthalten, die zwei oder mehreren Polymerklassen zugeordnet werden können.

Erfindungsgemäß enthält die Komponente (A) ein oder mehrere Polyacrylatpolyole und/oder Polymethacrylatpolyole. Die beiden vorgenannten Polymere bzw. Polymerklassen werden auch als Poly(meth)acrylatpolyole bezeichnet. Zusammen mit dem oder den Polyacrylatpolyolen und/oder Polymethacrylatpolyolen können weitere oligomere und/oder polymere polyhydroxylgruppenhaltige Verbindungen, beispielsweise Polyesterpolyole, Polyurethanpolyole und Polysiloxanpolyole, insbesondere Polyesterpolyole, eingesetzt werden.

Die erfindungsgemäß als Komponente (A) eingesetzten Poly(meth)acrylatpolyole basieren vorzugsweise auf mindestens einem der nachfolgend aufgeführten Monomere (Monomerbausteine). Mehr bevorzugt wird hierfür mindestens einer der nachfolgenden hydroxylgruppenhaltigen Monomerbausteine und gegebenenfalls mindestens einer der nachfolgenden Monomerbausteine, die keine hydroxylgruppenhaltigen Monomerbausteine sind, eingesetzt. Besonders bevorzugt werden Copolymere eingesetzt, die auf mindestens einem hydroxylgruppenhaltigen Monomerbaustein und mindestens einem Monomerbaustein, der keine Hydroxylgruppen enthält, basieren. Beispiele für die entsprechenden Monomerbausteine werden nachfolgend aufgeführt.

Als hydroxylgruppenhaltige Monomerbausteine werden für die Poly(meth)acrylatpolyole bevorzugt Hydroxyalkylacrylate und/oder Hydroxyalkylmethacrylate eingesetzt. Vorzugweise sind diese ausgewählt aus 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat und/oder 4-Hydroxybutylmethacrylat. Besonders bevorzugt sind die hydroxylgruppenhaltigen Monomerbausteine 4-Hydroxybutylacrylat und/oder 4-Hydroxybutylmethacrylat. Die hydroxylgruppenhaltigen Monomerbausteine werden vorzugsweise zu 20 bis 60 Gew.-%, bezogen auf die Monomergesamtmenge des jeweiligen Polymers, eingesetzt.

Als weitere Monomerbausteine werden für die Poly(meth)acrylatpolyole bevorzugt Alkylacrylate und/oder Alkylmethacrylate eingesetzt. Vorzugsweise sind diese ausgewählt aus Methylacrylat, Methylmethacrylat, Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat, Laurylmethacrylat, Cycloalkylacrylate und/oder Cycloalkylmethacrylate. Bevorzugte Cycloalkyl(meth)acrylate sind Cyclopentylacrylat, Cyclopentylmethacrylat, Isobornylacrylat, Isobornylmethacrylat oder insbesondere Cyclohexylacrylat und/oder Cyclohexylmethacrylat. Sofern die vorstehenden Monomere eingesetzt werden, erfolgt dies vorzugsweise in Mengen von 35 bis 80 Gew.-%, bezogen auf die Monomergesamtmenge.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie Acryl- und/oder Methacrylsäure eingesetzt werden. Sofern vinylaromatische Kohlenwasserstoffe als Monomere eingesetzt werden, erfolgt dies vorzugsweise in Mengen von 0,1 bis 40 Gew.-%, bezogen auf die Monomergesamtmenge. Sofern Acryl- und/oder Methacrylsäure eingesetzt wird, erfolgt dies vorzugsweise in Mengen von 0,1 bis 5 Gew.-%, bezogen auf die Gesamtmenge der eingesetzten Monomere

Des Weiteren können Verbindungen als Monomerbaustein eingesetzt werden, die über eine Phosphatgruppe verfügen. Diese werden durch Umsetzung geeigneter hydroxylgruppenhaltiger (meth)acrylischer Verbindungen durch Umesterung hergestellt.

Solche Monomere sind vorzugsweise durch die allgemeine Formel (1) wiedergegeben:

$$(R')_2C = C(R') \, (\text{-COO-R''-O-P(O)} \, (\text{-OR})_2) \qquad (1)$$

Mit R' = H oder $CH_3$

R" = Alkyl oder Alkyl-O-alkyl und

R''' = H oder Alkyl.

In den vorgenannten Resten R', R" und R''' kann Alkyl verzweigt oder unverzweigt sowie gegebenenfalls cyclisch sein. Unter dem Begriff "Alkyl" werden im Rahmen der vorliegenden Erfindung gesättigte Kohlenwasserstoffreste mit mindestens einem Kohlenstoffatom wie Methyl ($C_1$-Alkyl), Ethyl ($C_2$-Alkyl) oder Hexyl ($C_6$-Alkyl) verstanden. Die Anzahl der Kohlenstoffatome ist prinzipiell nicht beschränkt, vorzugsweise sind es nicht mehr als 18 C-Atome pro Alkyl. Sofern vorhanden, werden solche Monomere in Mengen von 0,1 bis 20 Gew.-%, bezogen auf die Gesamtmonomermenge, eingesetzt. Solche Monomere sind kommerziell erhältlich, beispielsweise als Sipomer PAM® der Rhodia Solvay Group.

Die erfindungsgemäß als Komponente (A) eingesetzten Poly(meth)acrylatpolyole sind vorzugsweise Copolymerisate und weisen vorzugsweise massenmittlere Molekulargewichte Mw zwischen 1 000 und 20 000 Dalton, insbesondere zwischen 1 500 und 10 000 Dalton auf, jeweils gemessen mittels Gelpermeationschromatographie (GPC) gegen einen Polystyrolstandard.

Die Glasübergangstemperatur der Poly(meth)acrylatpolyole liegt in der Regel zwischen -150 und 150 °C, insbesondere zwischen -40 und 120 °C (gemessen mittels DSC-Messungen nach DIN-EN-ISO 11357-2:2011-04-28).

Die Poly(meth)acrylatpolyole weisen bevorzugt eine OH-Zahl von 60 bis 250 mg KOH/g (Polyol), insbesondere zwischen 70 und 200 mg KOH/g auf.

Die Säurezahl der Poly(meth)acrylatpolyole gemäß Komponente (A) beträgt nicht mehr als 15 mg KOH/g der entsprechenden Poly(meth)acrylatpolyole.

Die Säurezahl gibt hierbei die Anzahl der mg Kaliumhydroxid an, die zur Neutralisation von 1 g der jeweiligen Verbindung (Poly(meth)acrylatpolyole) verbraucht wird (DIN EN ISO 2114:2006-11).

Da die als Komponente (A) eingesetzten Poly(meth)acrylatpolyole eine Säurezahl von nicht mehr als 15 mg KOH pro Gramm der entsprechenden Poly(meth)acrylatpolyole aufweisen, ist es bevorzugt, dass das entsprechende Poly(meth)acrylatpolyol auf den folgenden monomeren Bausteinen basiert (die Gewichtsprozentangaben sind jeweils bezogen auf die Monomergesamtmenge des jeweiligen Polymers):

20 bis 60 Gew.-% von mindestens einem Hydroxyalkylacrylat oder Hydroxyalkylmethacrylat (wie vorstehend definiert),

35 bis 80 Gew.-% von mindestens einem Alkylacrylat oder Alkylmethacrylat (wie vorstehend definiert) und

0 bis 40 Gew.-%, vorzugsweise 0,1 bis 40 Gew.-%, von mindestens einem vinylaromatischen Kohlenwasserstoff (wie vorstehend definiert), vorzugsweise von Styrol.

Die Komponente (A) kann im erfindungsgemäßen Beschichtungsmittelsystem prinzipiell in beliebigen dem Fachmann bekannten Anteilen enthalten sein. Vorzugsweise hat die Komponente (A) einen Anteil von 30 bis 80 Gew.-%, mehr bevorzugt von 50 bis 70 Gew.-%, jeweils bezogen auf den Bindemittelgehalt des Beschichtungsmittelsystems.

Das erfindungsgemäße Beschichtungsmittelsystem enthält als Komponente (B) mindestens eine polyisocyanathaltige Verbindung. Als polyisocyanathaltige Verbindung können alle dem Fachmann hierfür bekannten Verbindungen eingesetzt werden (siehe beispielsweise in Ulrich Meier-Westhues: Polyurethane. Lacke, Kleb- und Dichtstoffe. Vincentz-Verlag, ISBN: 9783866308961, April 2007). Als Komponente (B) geeignet sind zum Beispiel an sich bekannte substituierte oder unsubstituierte aromatische, aliphatische, cycloaliphatische und/oder heterocyclische Polyisocyanate.

Beispiele für bevorzugte polyisocyanathaltige Verbindungen sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z. B. Desmodur® W der Fa. Bayer AG), Tetramethylxylylendiisocyanate (TMXDI; kommerziell erhältlich beispielsweise als TMXDI® der Firma Allnex Belgium SA/NV) und Mischungen der vorgenannten Polyisocyanate. TMXDI wird auch als m-TMXDI; Bisisocyanatopropylbenzol; m-Phenyldimethyldiisocyanat; m-Tetramethylxylylendiisocyanat; Tetramethyl-m-xylylendiisocyanat; 1,3-Bis(2-isocyanato-2-propyl)benzol oder 1,3-Bis(alpha-isocyanatoisopropyl)benzol bezeichnet.

Bevorzugte polyisocyanathaltige Verbindungen sind auch die Biuret-Dimere und Iminooxadiazindione der vorgenannten Diisocyanate. Ebenso bevorzugt sind 1,6-Hexamethylendiisocyanat (HMDI), Isophorondiisocyanat (IPDI) und 4,4'-Methylendicyclohexyldiisocyanat, deren Biuret-Dimere und/oder deren Iminooxadiazindione und/oder deren asymmetrische Trimere, wie z. B. das im Handel unter der Bezeichnung Desmodur N3900 erhältliche asymmetrische HDI-Trimer mit Anteilen asymmetrischer Trimere.

Mehr bevorzugte polyisocyanathaltige Verbindungen sind ausgewählt aus 1,6-Hexamethylendiisocyanat, Isophorondiisocyanat, 4,4'-Methylendicyclohexyldiisocyanat, den Biuret-Dimeren der vorgenannten Diisocyanate, den Iminooxadiazindione der vorgenannten Diisocyanate und/oder den asymmetrischen Trimeren der vorgenannten Diisocyanate.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A 4, 598,131 beschrieben.

Polyisocyanathaltige Verbindungen gemäß Komponente (B) können in einem geeigneten Lösungsmittel (J) vorliegen, wie nachfolgend im Zusammenhang mit dem Lösungsmittel (J) sowie dem Herstellungsverfahren des erfindungsgemäßen Beschichtungsmittelsystems weiter ausgeführt.

Sofern das erfindungsgemäße Beschichtungsmittelsystem als einkomponentiges System (1K-System) bereitgestellt werden soll, so werden vorzugsweise polyisocyanatgruppenhaltige Verbindungen (B) gewählt, deren freie Isocyanatgruppen mit Blockierungsmitteln blockiert sind. Beispielsweise können die Isocyanatgruppen mit substituierten Pyrazolen, insbesondere mit alkylsubstituierten Pyrazolen wie 3-Methylpyrazol, 3,5-Dimethylpyrazol, 4-Nitro-3,5-dimethylpyrazol oder 4-Bromo-3,5-dimethylpyrazol blockiert werden. Besonders bevorzugt werden die Isocyanatgruppen der Komponente (B) mit 3,5-Dimethylpyrazol blockiert. Zur Ausbildung von Polyurethanen (vernetzter Urethane) werden die so blockierten Polyisocyanate mit (weiteren) Komponenten (A) bei erhöhter Temperatur zur Reaktion gebracht wobei durch z.B. Um-urethanisierung und Freisetzung der Blockierungskomponente eine Netzwerkstruktur aufgebaut wird. Das Blockierungsmittel kann bei den gegebenen Temperaturen ggfs. ganz oder teilweise entweichen oder auch als weitere Komponente gänzlich im Lackfilm verbleiben.

Die Komponente (B) im erfindungsgemäßen Beschichtungsmittelsystem kann prinzipiell in beliebigen dem Fachmann bekannten Mengen vorliegen. Vorzugsweise hat die Komponente (B) einen Anteil von 20 bis 50 Gew.-%, besonders bevorzugt von 25 bis 40 Gew.-%, jeweils bezogen auf den Bindemittelgehalt des Beschichtungsmittelsystems.

Weiterhin ist es bevorzugt, dass im erfindungsgemäßen Beschichtungsmittelsystem die Gewichtsanteile der Komponente (A) und der Komponente (B) so ausgewählt werden, dass das molare Äquivalentverhältnis der Hydroxylgruppen der polyhydroxylgruppenhaltigen Verbindungen gemäß Komponente (A) gegenüber den Isocyanatgruppen der polyisocyanathaltigen Verbindung gemäß Komponente (B) zwischen 1 : 0,9 und 1 : 1,5, bevorzugt zwischen 1 : 0,9 und 1 : 1,2, besonders bevorzugt zwischen 1: 0,95 und 1:1,1 liegt. Wenn im erfindungsgemäßen Beschichtungsmittelsystem auch eine hydroxygruppenhaltige Verbindung gemäß Komponente (D) enthalten ist, wird deren Anteil an den vorgenannten molaren Äquivalentverhältnissen im Gewichtsanteil der Komponente (A) mitberücksichtigt. Das heißt, bei dieser Fallkonstellation ist die Summe der Hydroxylgruppen der polyhydroxygruppenhaltigen Verbindung gemäß Komponente (A) und der hydroxylgruppenhaltigen Verbindung gemäß Komponente (D) zu berücksichtigen.

Das erfindungsgemäße Beschichtungsmittelsystem enthält als Komponente (C) als Katalysator mindestens zwei Salze einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist.

Im Rahmen des erfindungsgemäßen Beschichtungsmittelsystems fungiert die Komponente (C) somit als Katalysator und umfasst mindestens zwei Salze einer aliphatischen Monocarbonsäure mit mindestens vier Kohlenstoffatomen. Das erste Salz hat als Metallkomponente Bismut (Bi), das zweite Salz hat als Metallkomponente Magnesium (Mg), Natrium (Na), Kalium (K) oder Calcium (Ca). Dies bedeutet, dass im entsprechenden Salz das jeweilige Metall das Kation und die aliphatische Monocarbonsäure das entsprechende Anion ausbilden.

Dabei können auch Gemische von aliphatischen Monocarbonsäuren mit mindestens vier Kohlenstoffatomen eingesetzt werden. Somit ist es im Rahmen der vorliegenden Erfindung möglich, dass beispielsweise ein erstes Salz basierend auf Bismut und zwei oder mehrere zweite Salze eingesetzt werden, beispielsweise zwei zweite Salze, wobei ein Salz die Metallkomponente Calcium und ein Salz die Metallkomponente Natrium aufweist. Ebenso ist es möglich, dass beispielsweise auch zwei oder mehrere unterschiedliche Bismutsalze als erstes Salz eingesetzt werden, wobei sich die einzelnen Bismutsalze hinsichtlich der Definition der Anionenkomponente, also der aliphatischen Monocarbonsäure mit mindestens vier Kohlenstoffatomen, unterscheiden. Sinngemäßes gilt selbstverständlich auch für das zweite Salz, wobei beispielsweise Gemische aus zwei oder mehreren Natriumsalzen und/oder Calciumsalzen eingesetzt werden können.

Die einzelnen Salze einer aliphatischen Monocarbonsäure mit mindestens vier Kohlenstoffatomen als solche, die im erfindungsgemäßen Beschichtungsmittelsystem die Komponente (C) ausbilden, sind dem Fachmann bereits bekannt. Allerdings sind die spezifischen Gemische gemäß Komponente (C) von mindestens zwei Salzen einer aliphatischen Monocarbonsäure mit mindestens vier Kohlenstoffatomen, wobei das erste Salz als Metallkomponente Bismut und das zweite Salz als Metallkomponente beispielsweise Calcium aufweist, noch nicht bekannt. Die Gemische können durch simples Vermischen der einzelnen Salze erhalten werden.

Die aliphatischen Monocarbonsäuren mit mindestens vier Kohlenstoffatomen als solche sind dem Fachmann ebenfalls bekannt. Die aliphatischen Monocarbonsäuren weisen also Kohlenwasserstofffragmente auf, die gegebenenfalls verzweigt und/oder substituiert, beispielsweise mit Aromaten oder Halogenen, sein können. Vorzugsweise sind die Kohlenwasserstofffragmente der entsprechenden Säuren linear und unsubstituiert. Weiterhin ist es bevorzugt, dass die Obergrenze der Kohlenstoffatome in diesen Kohlenwasserstofffragmenten der aliphatischen Monocarbonsäuren maximal 30 Kohlenstoffatome beträgt. Mehr bevorzugt sind 6 bis 18 Kohlenstoffatome ($C_6$-$C_{18}$-Carbonsäuren), besonders bevorzugt sind 8 bis 12 Kohlenstoffatome ($C_8$-$C_{12}$-Carbonsäuren), wie 2-Ethylhexansäure, n-Oktansäure oder Neodekansäure.

Vorzugsweise liegen die entsprechenden Salze als Lösung in der korrespondierenden organischen Säure vor, beispielsweise als Lösung von Neodekansäure im Fall von Bi-Neodekanoat. Darüber hinaus können noch weitere Stoffe enthalten sein, die der Stabilisierung der Verbindung gegenüber Spuren von Wasser oder auch zur Verhinderung der Kristallisationsneigung dienlich sind.

Vorzugsweise wird der Katalysator gemäß Komponente (C) hergestellt durch Umsetzung der entsprechenden Hydroxide von Bi, Mg, Na, K und/oder Ca mit mindestens einer aliphatischen Monocarbonsäure mit mindestens vier Kohlenstoffatomen. Vorzugsweise erfolgt die Umsetzung mit einem Überschuss an mindestens einer aliphatischen Monocarbonsäure und/oder unter Verwendung eines aromatischen Lösungsmittels, insbesondere Xylol, als Schleppmittel zur Entfernung von Wasser. Vorzugsweise wird die Überschussmenge an aliphatischer Monocarbonsäure, insbesondere Neodekansäure, so gewählt, dass eine etwa 50%ige Lösung des entsprechenden Metallsalzes in der aliphatischen Monocarbonsäure erhalten wird.

Weiterhin ist es bevorzugt, dass das erste Salz und das zweite Salz dieselbe aliphatische Monocarbonsäure als Anionenkomponente des jeweiligen Salzes aufweisen.

Weiterhin ist es bevorzugt, dass das zweite Salz als Metallkomponente Natrium (Na) und/oder Kalium (K) aufweist. Der Vollständigkeit halber wird angemerkt, dass für den Fall, dass das zweite Salz als Metallkomponente sowohl Natrium als auch Kalium aufweist, prinzipiell mindestens zwei zweite Salze vorliegen in Form eines Gemisches aus mindestens einem Salz mit Natrium als Metallkomponente und mindestens einem Salz mit Kalium als Metallkomponente. Die Anionenkomponente der jeweiligen Salze kann gleich oder verschieden sein. Vorzugsweise weisen das K-Salz und das Na-Salz dieselbe Anionenkomponente einer aliphatischen Monocarbonsäure auf. Denkbar ist aber auch, dass Gemische von unterschiedlichen Anionenkomponenten für das entsprechende Na-Salz und/oder das entsprechende K-Salz eingesetzt werden.

In einer weiteren bevorzugten Ausführungsform weist das zweite Salz als Metallkomponente Magnesium (Mg) und/oder Calcium (Ca) auf. Der Vollständigkeit halber wird auch hier angemerkt, dass für den Fall, dass das zweite Salz als Metallkomponente sowohl Magnesium als auch Calcium aufweist, prinzipiell mindestens zwei zweite Salze vorliegen in Form eines Gemisches aus mindestens einem Salz mit Magnesium als Metallkomponente und mindestens einem Salz mit Calcium als Metallkomponente. Die Anionenkomponente der jeweiligen Salze kann gleich oder verschieden sein. Vorzugsweise weisen das Ca-Salz und das Mg-Salz dieselbe Anionenkomponente einer aliphatischen Monocarbonsäure auf. Denkbar ist aber auch, dass Gemische von unterschiedlichen Anionenkomponenten für das entsprechende Mg-Salz und/oder das entsprechende Ca-Salz eingesetzt werden.

Die mindestens zwei Salze, die im erfindungsgemäßen Beschichtungsmittelsystem als Katalysator gemäß Komponente (C) eingesetzt werden, können in beliebigen, dem Fachmann bekannten molaren Verhältnissen zueinander vorliegen. Vorzugsweise liegt das erste Salz, das als Metallkomponente Bismut aufweist, im molaren Überschuss gegenüber dem zweiten Salz, das als Metallkomponente Magnesium, Natrium, Kalium oder Calcium aufweist, vor. Insbesondere betrifft das Mol-Verhältnis von erstem Salz zu zweitem Salz 1,1:1 bis 10:1 (Mol/Mol).

Weiterhin ist es bevorzugt, dass im Katalysator gemäß Komponente (C) die aliphatische Monocarbonsäure eine $C_6$-$C_{18}$-Carbonsäure ist, insbesondere ein Mg-octoat, Ca-octoat, K-octoat, Bi-octoat oder Na-octoat, ein Mg-, Ca-, K-, Na- oder Bi-Salz der $C_{10}$-Neodekansäure und/oder ein Mg-, Ca-, K-, Na- oder Bi-Salz der $C_9$-Neononansäure.

Beispielsweise können die Katalysatoren gemäß Komponente (C) hergestellt werden durch Vermischen der entsprechenden Salze von organischen Säuren in den entsprechenden molaren Verhältnissen. Dabei ist es auch möglich, dass der Katalysator gemäß Komponente (C) erst in situ im erfindungsgemäßen Beschichtungsmittelsystem hergestellt wird. Beispielsweise können die calciumhaltige Komponente (zweites Salz) und die bismuthaltige Komponente (erstes Salz) des Katalysators zunächst getrennt voneinander oder jeweils als Gemisch mit jeweils einer der Komponenten (A) oder (B) bereitgestellt werden.

Neben den mindestens zwei Salzen mit der Metallkomponente Bismut im ersten Salz sowie den Metallkomponenten Magnesium, Natrium, Kalium oder Calcium im zweiten Salz können die Katalysatoren gemäß Komponente (C) auch noch weitere Metallkomponenten enthalten. Als weitere Metallkomponenten kommen prinzipiell alle Metalle in Frage, die dem Fachmann in Zusammenhang mit der Herstellung von Polyurethan oder Beschichtungsmittelsystemen bekannt sind. Die weiteren Metallkomponenten können prinzipiell in beliebigen molaren Verhältnissen zu Bismut eingesetzt werden. Als weitere Metallkomponente wird vorzugsweise Zink (Zn), Zirkonium (Zr) und/oder Aluminium (Al), mehr bevorzugt Zink (Zn) und/oder Zirkonium (Zr), insbesondere Zink (Zn), eingesetzt. Weiterhin ist es bevorzugt, dass kein Lithium als weitere Metallkomponente eingesetzt wird.

Sofern weitere Metallkomponenten vorliegen, werden diese Metallkomponenten vorzugsweise ebenfalls in Salzform eingesetzt, wobei die Salze auch andere Anionenkomponenten als aliphatische Monocarbonsäuren aufweisen können.

In einer bevorzugten Ausführungsform der vorliegenden Erfindung umfasst der Katalysator gemäß Komponente (C) mindestens ein weiteres Salz, das als Metallkomponente Zink (Zn) aufweist. Weiterhin ist es bevorzugt, dass im zweiten Salz als Metallkomponente Kalium (K) und/oder Natrium (Na) verwendet wird.

In einer weiteren Ausführungsform der vorliegenden Erfindung werden neben den mindestens zwei Salzen, die auf Bismut (erstes Salz) sowie Magnesium, Calcium, Natrium oder Kalium (zweites Salz) beruhen, keine weiteren Katalysatoren mit anderen Metallkomponenten eingesetzt.

In einer weiteren Ausführungsform der vorliegenden Erfindung ist es bevorzugt, dass der Katalysator gemäß Komponente (C) oder das gesamte Beschichtungsmittelsystem weitgehend frei oder vollständig frei von Lithium oder lithiumhaltigen Verbindungen ist.

Vorzugsweise ist das gesamte Beschichtungsmittelsystem vollständig frei von Lithium oder lithiumhaltigen Verbindungen.

Unter dem Begriff "weitgehend frei" von Lithium oder lithiumhaltigen Verbindungen wird im Rahmen der vorliegenden Erfindung verstanden, dass der Gehalt an Lithium oder lithiumhaltigen Verbindungen maximal 5 Gew.-ppm, vorzugsweise maximal 1 Gew.-ppm, bezogen auf das gesamte Beschichtungsmittelsystem beträgt. Unter dem Begriff "vollständig frei" von Lithium oder lithiumhaltigen Verbindungen im Rahmen der vorliegenden Erfindung wird verstanden, dass der Gehalt an Lithium oder lithiumhaltigen Verbindungen maximal 0,01 Gew.-ppm, vorzugsweise maximal 0,001 Gew.-ppm, bezogen auf das gesamte Beschichtungsmittelsystem beträgt.

Der Katalysator gemäß Komponente (C) kann im erfindungsgemäßen Beschichtungsmittelsystem prinzipiell in beliebigen dem Fachmann bekannten Mengen vorliegen. Vorzugsweise hat die Komponente (C) einen Anteil von 35 bis 2000 Gew.-ppm, mehr bevorzugt von 35 bis 1000 Gew.-ppm und besonders bevorzugt von 100 bis 1000 Gew.-ppm, jeweils bezogen auf den Bindemittelgehalt des Beschichtungsmittelsystems.

Im erfindungsgemäßen Beschichtungsmittelsystem können gegebenenfalls außer den vorstehend beschriebenen Katalysatoren gemäß Komponente (C) auch sonstige Katalysatoren zusätzlich eingesetzt werden, die dem Fachmann im Zusammenhang mit der Herstellung von Polyurethanen oder Beschichtungsmittelsystemen bekannt sind, die aber nicht unter die Definition der Katalysatoren gemäß Komponente (C) fallen.

Wie eingangs bereits beschrieben, können die vorstehend definierten Komponenten (A) bis (C) im erfindungsgemäßen Beschichtungsmittelsystem i) getrennt voneinander vorliegen oder ii) vollständig oder zumindest teilweise miteinander vermischt sein. Sofern die Komponenten (A) bis (C) gemäß der ersten Option getrennt voneinander vorliegen, handelt es sich hierbei vorzugsweise um das vorstehend bereits erwähnte Zweikomponentensystem (2K-System), wobei unter der Definition eines 2K-Systems auch solche Systeme verstanden werden, bei denen drei oder mehr unterschiedliche Komponenten bereitgestellt werden. Als 2K-Systeme werden im Rahmen der vorliegenden Erfindung prinzipiell alle Beschichtungsmittelsysteme verstanden, bei denen die Komponenten (A) und (B) getrennt voneinander vorliegen, insbesondere vor der Applikation des entsprechenden Systems, beispielsweise in der Ausbildung eines Polyurethans bzw. eines Lackes.

Dies bedeutet aber auch, dass die bei der vorgenannten zweiten Option, zweite Variante, umfassten Beschichtungsmittelsysteme, in denen die Komponenten (A) bis (C) zumindest teilweise miteinander vermischt sind, ebenfalls als 2K-System im Sinne der vorliegenden Erfindung aufzufassen sind, sofern die Komponenten (A) und (B) getrennt voneinander vorliegen. Die Komponente (C) kann bei dieser Fallkonstellation jedoch zumindest teilweise oder vollständig mit einer oder beiden Komponenten (A) und (B) vermischt sein.

Der Begriff "zumindest teilweise miteinander vermischt" hat im Rahmen der vorliegenden Erfindung die vorliegende Bedeutung, die exemplarisch an einem Beispiel verdeutlicht ist. Beispielsweise ist die Komponente (C) mit der Komponente (A) vermischt, während die Komponente (B) getrennt zu diesem Gemisch aus (A) und (C) vorliegt. Gegebenenfalls kann aber auch die Komponente (B) mit einer Teilmenge der Komponente (C) vermischt sein. Weiterhin können die Gemische aus (A) und (C) sowie aus (B) und (C) zusätzlich mindestens eine optionale Komponente wie nachfolgend definiert enthalten.

Sofern im erfindungsgemäßen Beschichtungsmittelsystem gemäß vorstehend definierter zweiter Option, erste Variante, die Komponenten (A) bis (C) vollständig miteinander vermischt sind, handelt es sich hierbei vorzugsweise um ein vorstehend bereits erwähntes einkomponentiges System (1K-System), bei dem die freien Isocyanatgruppen der Komponente (B) vorzugsweise durch geeignete Blockierungsmittel blockiert sind.

Zwar können die einzelnen Komponenten (A) bis (C) jeweils in Teilmengen bereitgestellt werden, wobei einzelne Teilmengen wiederum mit anderen Komponenten, beispielsweise den nachstehend beschriebenen optionalen Komponenten, vermischt sein können. Vorzugsweise werden jedoch die Komponenten (A) und (B) nicht in Teilen, sondern jeweils als einzelne (komplette) Komponente bereitgestellt. Wie vorstehend beschrieben, kann jedoch insbesondere der Katalysator gemäß Komponente (C) in Teilmengen und/oder in Teilkomponenten mindestens einer der beiden Komponenten (A) und/oder (B) zumindest teilweise miteinander vermischt sein. Bei dieser Fallkonstellation wird der Katalysator gemäß Komponente (C) vorzugsweise in situ unmittelbar vor der Applikation des entsprechenden Beschichtungsmittelsystems hergestellt.

Erfindungsgemäß werden sämtliche Komponenten (A) bis (C) sowie gegebenenfalls die nachfolgend beschriebenen optionalen Komponenten des jeweiligen Beschichtungsmittelsystems spätestens (unmittelbar) vor der gewünschten Anwendung miteinander vollständig vermischt, unabhängig davon, ob es sich um ein 1K-System oder um ein 2K-System handelt. Beispiele für (gewünschte) Anwendungen werden im nachfolgenden Text beschrieben. Im Rahmen dieser Anwendungen findet dann das vorstehend bereits beschriebene Aushärten des erfindungsgemäßen Beschichtungsmittelsystems unter Polyurethanausbildung durch Reaktion der Komponenten (A) und (B) statt. Aufgrund der teilweise hohen Reaktivität dieser beiden Komponenten ist es häufig vorteilhaft, diese Komponenten im Rahmen des Beschichtungsmittelsystems (also vor der gewünschten Anwendung) getrennt voneinander bereitzustellen (auch im Zusammenhang mit einer erhöhten Lagerstabilität). Folglich kann die Polyurethanreaktion im Rahmen der gewünschten Anwendung besser und/oder gezielter gesteuert sowie kontrolliert werden.

Außer den vorstehend bereits beschriebenen Komponenten (A) bis (C) können die erfindungsgemäßen Beschichtungsmittelsysteme gegebenenfalls auch noch mindestens eine weitere Komponente (D) bis (J) umfassen, die nachfolgend präzisiert werden.

Die optionalen Komponenten (D) bis (J) sind ausgewählt aus hydroxylgruppenhaltigen Verbindungen (D), Aminoplastharzen und/oder Tris(Alkoxycarbonyl-amino)Triazinen (E), Lackadditiven (F), aromatischen Carbonsäuren (G), Pigmenten (H), sonstigen Füllstoffen (I) und/oder Lösungsmitteln (J).

In Analogie zu dem vorstehend beschriebenen Komponenten (A) bis (C) können auch die optionalen Komponenten (D) bis (J) getrennt voneinander vorliegen oder vollständig oder zumindest teilweise miteinander vermischt sein und/oder mit den Komponenten (A) bis (C) vermischt sein.

Vorzugsweise umfasst das erfindungsgemäße Beschichtungsmittelsystem als optionale Komponente mindestens eine weitere Komponente ausgewählt aus hydroxylgruppenhaltigen Verbindungen (D), Lackadditiven (F), Pigmenten (H) und/oder Lösungsmitteln (J).

Das erfindungsgemäße Beschichtungsmittelsystem enthält gegebenenfalls als optionale Komponente (D) mindestens eine hydroxylgruppenhaltige Verbindung. Hydroxylgruppenhaltige (hydroxygruppenhaltige) Verbindungen als solche sind dem Fachmann bekannt. Die hydroxylgruppenhaltige Verbindung (D) weist in der Regel zwei oder mehr Hydroxylgruppen auf, vorzugsweise weist sie zwei Hydroxylgruppen auf. Die hydroxylgruppenhaltige Verbindung (D) im Rahmen der vorliegenden Erfindung fällt nicht unter die Definition der vorstehend beschriebenen polyhydroxygruppenhaltigen Verbindung (A).

Vorzugsweise handelt es sich bei den hydroxygruppenhaltigen Verbindungen (D) um monomere Verbindungen und/oder um Verbindungen mit einem Molekulargewicht < 500 g/mol, vorzugsweise < 200 g/mol. Die hydroxylgruppenhaltigen Verbindungen (D) werden auch als niedermolekulare Polyole bezeichnet.

Die Komponente (D) hat, sofern vorhanden, einen Anteil von 0,5 bis 20 Gew.-%, besonders bevorzugt von 1 bis 10 Gew.-%, ganz besonders bevorzugt von 1 bis 5 Gew.-%, jeweils bezogen auf den Bindemittelgehalt des Beschichtungsmittelsystems.

Bevorzugte Beispiele für eine hydroxylgruppenhaltige Verbindung (D) sind Ethylenglykol, Neopentylglykol, 1,3-Butandiol 1,2-Propandiol oder Diole aus dimerisierten und danach hydrierten natürlichen Fettsäuren eingesetzt (beispielsweise das Handelsprodukt Sovermol® 908). Bevorzugt werden solche (niedermolekularen) Polyole gemäß Komponente (D) in untergeordneten Anteilen der Polyolkomponente (A) beigemischt, beispielsweise in 1 bis 20 Gew.-%, bezogen auf den Gehalt an Komponente (A).

Das erfindungsgemäße Beschichtungsmittelsystem enthält gegebenenfalls als optionale Komponente (E) mindestens ein Aminoplastharz und/oder mindestens ein Tris(alkoxycarbonylamino)Triazin. Verbindungen, die unter die Komponente (E) der vorliegenden Erfindung fallen, sind dem Fachmann bekannt. Sofern vorhanden, hat die Komponente (E) einen Anteil von 0,5 bis 30 Gew.-%, vorzugsweise von 0,5 bis 15 Gew.-%, bezogen auf den Bindemittelgehalt des Beschichtungsmittelsystems.

Beispiele für geeignete Tris(Alkoxycarbonylamino)Triazine sind in der US-A 4,939,213, der US-A 5,084,541 und der EP-A 0 624 577 genannt.

Beispiele für geeignete Aminoplastharze (E) sind alle im Bereich der Lackindustrie üblicherweise eingesetzten Aminoplastharze, wobei über die Reaktivität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

Das erfindungsgemäße Beschichtungsmittelsystem enthält gegebenenfalls als optionale Komponente (F) mindestens ein Lackadditiv. Lackadditive als solche sind dem Fachmann bekannt. Sofern vorhanden, hat ein Lackadditiv (F) einen Anteil von 0,5 bis 30 Gew.-%, vorzugsweise von 0,5 bis 25 Gew.-% und insbesondere von 1 bis 20 Gew.-%, jeweils bezogen auf den Bindemittelgehalt des Beschichtungsmittelsystems.

Beispiele geeigneter Lackadditive (F) sind:

- insbesondere UV-Absorber wie zum Beispiel 2-(2-Hydroxyphenyl)-Benzotriazole, 2-Hydroxy-Benzophenone, Hydroxyphenyl-s-Triazine und Oxalanilide;
- insbesondere Lichtschutzmittel wie sog. HALS-Verbindungen ("hindered amine light stabiliser"; dabei handelt es sich um Derivate des 2,2,6,6-Tetramethylpiperidin; kommerziell erhältlich beispielsweise als Tinuvin®292 der BASF SE), Benztriazole wie Hydroxyphenylalkylbenzotriazol oder Oxalanilide;

- Radikalfänger;
- Slipadditive;
- Polymerisationsinhibitoren;
- Entschäumer;
- von den Komponenten (A) und (D) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (D) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel, insbesondere auf Basis eines Polyacrylats. Zum Einsatz kommen hier vorzugsweise Copolymere aus Ethylhexylacrylat und Ethylacrylat. Diese Copolymere habe vorzugsweise einen sehr niedrigen $T_G$-Wert, sind relativ unpolar und haben eine kleine OH-Zahl;
- filmbildende Hilfsmittel wie Cellulose-Derivate;
- Füllstoffe in Form von Nanopartikeln auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (D) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel.

In einer bevorzugten Ausführungsform enthält das erfindungsgemäße Beschichtungsmittelsystem als zusätzliche Komponente mindestens ein Lackadditiv (F), vorzugsweise mindestens einen Entschäumer. Der Entschäumer enthält vorzugsweise Polysiloxane oder Polyamide. Beispiele für geeignete Entschäumer sind BYK-322, BYK-066 N oder BYK-1640 der Firma BYK Additives & Instruments.

Das erfindungsgemäße Beschichtungsmittelsystem enthält gegebenenfalls als optionale Komponente (G) mindestens eine aromatische Carbonsäure. (Monomere) aromatische Carbonsäuren als solche sind dem Fachmann bekannt. Die aromatische Carbonsäure gemäß Komponente (G) kann als freie Säure (also in protonierter Form) oder in Form eines Salzes eingesetzt werden bzw. vorliegen. Sofern die aromatische Carbonsäure als Salz vorliegt, kann es sich beispielsweise um ein Alkalimetallsalz wie beispielsweise ein Na-Salz handeln.

Die Komponente (G) im erfindungsgemäßen Beschichtungsmittelsystem kann prinzipiell in beliebigen dem Fachmann bekannten Mengen vorliegen. Sofern vorhanden, hat die aromatische Carbonsäure (G) vorzugsweise einen Anteil von 0,1 bis 5 Gew.-%, mehr bevorzugt von 0,1 bis 3 Gew.-%, besonders bevorzugt von 0,2 bis 1,5 Gew.-%, bezogen auf den Bindemittelgehalt des Beschichtungsmittelsystems.

Geeignete aromatische Carbonsäuren (G) sind beispielsweise monomere aromatische Carbonsäuren, die gegebenenfalls substituiert sind, wobei deren Carboxylgruppe in Konjugation zu einem $\pi$-Eiektronensystem steht. Dabei kann die Anzahl der Carboxylgruppen variieren, wobei die Carbonsäuren bevorzugt eine Carboxylgruppe aufweisen. Bevorzugt weisen die monomeren aromatischen, gegebenenfalls substituierten Carbonsäuren ein Molekulargewicht < 500 g/mol, besonders bevorzugt < 300 g/mol, auf. Bevorzugt werden monomere aromatische, gegebenenfalls substituierte Carbonsäuren eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO (Dimethylsulfoxid) gewählt oder aber ein anderes geeignetes Medium, in dem die Säure löslich ist.

Geeignet sind vorzugsweise monomere aromatische Mono- und Polycarbonsäuren, die entsprechenden alkyl- und arylsubstituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, alkyl- bzw. arylsubstituierte Phthalsäure und Terephthalsäure, Benzoesäure und alkyl- bzw. arylsubstituierte Benzoesäure, aromatische Carbonsäuren mit weiteren funktionellen Gruppen wie Salicylsäure und Acetylsalicylsäure, alkyl- bzw. arylsubstituierte Salicylsäure oder Isomere davon, mehrkernige aromatische Carbonsäuren, wie die Isomeren der Naphthalincarbonsäure und deren Derivate.

Bevorzugt als monomere aromatische Carbonsäure (G) sind Benzoesäure, tert.-Butylbenzoesäure, 3,4-Dihydroxybenzoesäure, Salicylsäure und/oder Acetylsalicylsäure, bevorzugt ist die aromatische Carbonsäure Benzoesäure.

Das erfindungsgemäße Beschichtungsmittelsystem enthält gegebenenfalls als optionale Komponente (H) mindestens ein Pigment. Geeignete Pigmente als solche sind dem Fachmann bekannt (siehe beispielsweise in Thomas Brock, Michael Groteklaes, Peter Mischke: European Coaatings Handbook, Vincentz Verlag, ISBN 3-86630-849-3).

Der Anteil der Pigmente kann prinzipiell beliebig sein; sofern vorhanden, liegt er bevorzugt in einem P/B-Bereich von 0,1 bis 3,0 (P/B beschreibt das Gewichtsverhältnis von Pigment (P) zu Bindemittel (B); Bindemittel ist in diesem Fall als Summe aller filmbildenden Komponenten des Lacksystems zu verstehen).

Pigmente werden erfindungsgemäß insbesondere dann eingesetzt, wenn mit den Beschichtungsmittelzusammensetzungen pigmentierte Topcoats oder pigmentierte Undercoats, insbesondere pigmentierte Topcoats, hergestellt werden sollen.

Das erfindungsgemäße Beschichtungsmittelsystem enthält gegebenenfalls als optionale Komponente (I) mindestens einen sonstigen Füllstoff. Sonstige Füllstoffe als solche sind dem Fachmann bekannt. Sofern vorhanden, hat der sonstige Füllstoff (I) einen Anteil von 0,1 bis 30 Gew.-%, jeweils bezogen auf den Bindemittelgehalt des Beschichtungsmittelsystems.

Beispiele für geeignete sonstige Füllstoffe (I) sind Carbonate, Siliciumdioxide oder Bariumsulfate als solche oder auch in modifizierter Form. Im Gegensatz zu den vorstehend als Beispiele für Lackadditive (F) beschriebenen Füllstoffen sind die sonstigen Füllstoffe (I) keine nanoskaligen Partikel.

Das erfindungsgemäße Beschichtungsmittelsystem enthält gegebenenfalls als optionale Komponente (J) mindestens ein Lösungsmittel. Lösungsmittel als solche, insbesondere im Zusammenhang mit der Herstellung von Polyurethan oder von Beschichtungsmittelsystemen, sind dem Fachmann bekannt. Sofern vorhanden, hat das Lösungsmittel (J) einen Anteil von 20 bis 80 %, vorzugsweise von 30 bis 50 %, jeweils bezogen auf die Gesamtmenge des erfindungsgemäßen Beschichtungsmittelsystems.

Vorzugsweise werden solche Lösungsmittel eingesetzt, die zum Lösen der polyisocyanathaltigen Verbindungen gemäß der Komponente (A) und/oder der Komponente (B) geeignet sind.

Geeignete Lösungsmittel (J) sind solche, die eine ausreichende Löslichkeit der Polyisocyanatkomponente ermöglichen und frei von gegenüber Isocyanaten reaktiven Gruppen sind. Beispiele für solche Lösungsmittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, Xylol, n-Hexan, Cyclohexan, Solventnaphtha®, 2-Methoxypropylacetat (MPA), und Ethylethoxypropionat.

In einer Ausführungsform der vorliegenden Erfindung umfasst das erfindungsgemäße Beschichtungsmittelsystem mindestens eine weitere Komponente (D) bis (J), die ausgewählt ist aus hydroxylgruppenhaltigen Verbindungen (D), Aminoplastharzen und/oder Tris(Alkoxycarbonylamino)Triazinen (E), Lackadditiven (F), aromatischen Carbonsäuren (G), Pigmenten (H), sonstigen Füllstoffen (I) und/oder Lösungsmitteln (J), wobei

i) die einzelnen Komponenten (D) bis (J) getrennt voneinander vorliegen oder

ii) vollständig oder zumindest zeitweise miteinander und/oder mit den Komponenten (A) bis (C) vermischt sind.

In einer weiteren Ausführungsform der vorliegenden Erfindung umfasst das erfindungsgemäße Beschichtungsmittelsystem mindestens eine weitere Komponente ausgewählt aus Pigmenten (H) und/oder Lackadditiven (F), vorzugsweise mindestens einen Entschäumer. Weiterhin ist es in dieser Ausführungsform bevorzugt, dass das Beschichtungsmittelsystem kein Treibmittel enthält.

Weiterhin ist es bevorzugt, dass

i) das Beschichtungsmittelsystem nicht wässrig ist, und/oder

ii) die Komponenten (A) und/oder (B) jeweils ein Gemisch mit mindestens einem Lösungsmittel (J) ausbilden, wobei aber die Komponenten (A) und (B) getrennt voneinander vorliegen, und/oder

iii) der Katalysator gemäß Komponente (C) ganz oder zumindest teilweise in mindestens einer der getrennt voneinander vorliegenden Komponenten (A) oder (B), vorzugsweise in Komponente (A) enthalten ist.

Sofern das Beschichtungsmittelsystem nicht wässrig ist, bedeutet dies, dass vorzugsweis gar kein Wasser im entsprechenden Beschichtungsmittelsystem enthalten ist oder dass Wasser nur in Form von Verunreinigungen oder Spuren mit einem maximalen Gehalt von 0,1 Gew.-%, vorzugsweise von 0,01 Gew.-%, insbesondere von 0,001 Gew.-%, vorkommen kann, jeweils bezogen auf das Gesamtgewicht des entsprechenden Beschichtungsmittelsystems.

In einer Ausführungsform enthält das erfindungsgemäße Beschichtungsmittelsystem keine Treibmittel und/oder sonstige gasfreisetzende und/oder gasstabilisierende Komponenten. Vorzugsweise enthält das Beschichtungsmittelsystem in dieser Ausführungsform kein(e) Wasser, Fluorkohlenwasserstoffe, Kohlenstoffdioxid, Hydrofluorolefine und/oder Silicontenside.

In einer weiteren bevorzugten Ausführungsform liegt das erfindungsgemäße Beschichtungsmittelsystem als vollständiges Gemisch der Komponenten (A), (B) und (C) sowie der gegebenenfalls vorhandenen Komponenten (D) bis (J) vor.

In einer Ausführungsform der vorliegenden Erfindung umfasst das Beschichtungsmittelsystem die folgenden Komponenten:

- 50 bis 70 Gew.-% (bezogen auf den Bindemittelgehalt des Beschichtungsmittelsystems) von mindestens einer polyhydroxygruppenhaltigen Verbindung (A), vorzugsweise mindestens eines Poly(meth)acrylatpolyols,

- 25 bis 40 Gew.-% (bezogen auf den Bindemittelgehalt des Beschichtungsmittelsystems) von mindestens einer polyisocyanathaltigen Verbindung (B),

- 100 bis 1000 Gew.-ppm (bezogen auf den Bindemittelgehalt des Beschichtungsmittelsystems) von mindestens einem Katalysator (C),

- 0 bis 10 Gew.-%, vorzugsweise 1 bis 5 Gew.-% (bezogen auf den Bindemittelgehalt an Beschichtungsmittelsystem) von mindestens einer hydroxylgruppenhaltigen Verbindung (D),

- 0 bis 25 Gew.-%, vorzugsweise 1 bis 10 Gew.-% (bezogen auf den Bindemittelgehalt des Beschichtungsmittelsystems) von mindestens einem Lackadditiv (F), und

- 0 bis 300 Gew.-%, vorzugsweise 1 bis 100 Gew.-% (bezogen auf den Bindemittelgehalt des Beschichtungsmittelsystems) von mindestens einem Pigment (H).

Weiterhin kann in dieser Ausführungsform im erfindungsgemäßen Beschichtungsmittelsystem auch mindestens ein Lösungsmittel (J) enthalten sein. Sofern ein Lösungsmittel vorhanden ist, erfolgt dies zu Mengen von 1 bis 80 Gew.-%, vorzugsweise 5 bis 50 Gew.-% von mindestens einem Lösungsmittel (J). Im Gegensatz zu den anderen Komponenten bezieht sich der Lösungsmittelgehalt auf die Gesamtmenge des erfindungsgemäßen Beschichtungsmittelsystems.

Ein weiterer Gegenstand der vorliegenden Erfindung ist somit auch ein Verfahren zur Herstellung eines vorstehend beschriebenen Beschichtungsmittelsystems. Das Herstellungsverfahren als solches ist dem Fachmann bekannt. Wenn die zwingenden sowie gegebenenfalls die optionalen Komponenten des Beschichtungsmittelsystems vollständig oder zumindest teilweise miteinander vermischt sind, weiß der Fachmann, wie er ein solches Vermischen durchzuführen hat. Die Reihenfolge und/oder Dauer der einzelnen Vermischungsschritte sind prinzipiell beliebig, gegebenenfalls können alle Komponenten gleichzeitig miteinander vermischt werden. Sofern die zwingenden sowie gegebenenfalls vorhandenen Komponenten des erfindungsgemäßen Beschichtungsmittelsystems getrennt voneinander vorliegen, werden diese unmittelbar vor der Anwendung des entsprechenden Beschichtungsmittelsystems analog vermischt.

In einer Ausführungsform wird das erfindungsgemäße Verfahren zur Herstellung eines Beschichtungsmittelsystems so durchgeführt, dass die Komponenten (A), (B) und (C) sowie die gegebenenfalls vorhandenen Komponenten (D) und (J) getrennt voneinander bereitgestellt und anschließend miteinander vermischt werden. Vorzugsweise erfolgt das Vermischen bei Raumtemperatur, die Komponenten (A) und (C) werden vorab miteinander gemischt und/oder ein die Komponente (A) enthaltendes Gemisch zugegeben.

Die vorgenannte Ausführungsform wird vorzugsweise unmittelbar vor der konkreten Anwendung des erfindungsgemäßen Beschichtungsmittelsystems durchgeführt. Das heißt, eine vollständige Vermischung aller im erfindungsgemäßen Beschichtungsmittelsystem enthaltenen zwingenden Komponenten (A) bis (C) sowie die gegebenenfalls vorhandenen Komponenten (D) bis (J) wird erst unmittelbar vor der konkreten Anwendung des erfindungsgemäßen Beschichtungsmittelsystems erzielt. Der Begriff "unmittelbar vor der konkreten Anwendung" umfasst eine Zeitspanne von ungefähr einer Minute bis zu zwei Stunden

Ein weiterer Gegenstand der vorliegenden Erfindung ist somit auch ein Verfahren zur Herstellung eines Polyurethans durch zumindest teilweise oder vollständige Aushärtung des vorstehend beschriebenen erfindungsgemäßen Beschichtungsmittelsystems. Vorzugsweise ist das Polyurethan vollständig ausgehärtet. Die Aushärtung des erfindungsgemäßen Beschichtungsmittelsystems erfolgt nach vollständigem Vermischen sämtlicher Komponenten des Beschichtungsmittelsystems, insbesondere dem Vermischen der Komponenten (A) und (B). Sofern die Komponente (B) im Rahmen eines 1K-Systems noch mit Blockierungsmitteln geschützt (blockiert) sein sollte, muss das Blockierungsmittel zunächst entfernt werden, bevor eine Urethanreaktion unter Herstellung des erfindungsgemäßen Polyurethans stattfinden kann. Das Verfahren zur Herstellung des Polyurethans erfolgt somit vorzugsweise im Rahmen einer konkreten Anwendung des erfindungsgemäßen Beschichtungsmittelsystems. Die Herstellung eines Polyurethans als solches bzw. die Durchführung der Aushärtung ist dem Fachmann bekannt und auch in der Einleitung der vorliegenden Erfindung bereits gewürdigt worden.

In anderen Worten ausgedrückt bedeutet dies, dass durch die gewünschte/konkrete Anwendung (Applikation) des erfindungsgemäßen Beschichtungsmittelsystems Polyurethan durch Aushärtung eines auf den Komponenten (A) und (B) basierenden Beschichtungsmittels in Gegenwart des Katalysators (C) ausgebildet wird, vorzugsweise erfolgt die Polyurethanausbildung in Schichtform oder als Beschichtung.

Die Aushärtung der (des) applizierten erfindungsgemäßen Beschichtungsmittel(systems) kann aber auch nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung des Beschichtungsmittelsystems weist keine methodischen Besonderheiten auf, sondern kann nach den üblichen und bekannten Methoden wie Erhitzen in einem Umluftofen oder Bestrahlen mit IR-Lampen erfolgen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200 °C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80 °C, insbesondere zwischen 20 und 60 °C liegen.

Vorzugsweise bildet das nach dem erfindungsgemäßen Verfahren hergestellte Polyurethan eine Schicht oder Beschichtung aus oder ist zumindest Bestandteil einer Schicht oder Beschichtung, vorzugsweise ist die Schicht oder Beschichtung eine Lackschicht.

Vorzugsweise enthält das Polyurethan mindestens ein Pigment (H) und/oder das Polyurethan ist auf einer Basislackschicht, die gegebenenfalls mindestens ein Pigment (H) enthält, oder auf einem gegebenenfalls vorbeschichteten Substrat schichtförmig aufgebracht.

Weiterhin ist es bevorzugt, dass die Aushärtung des Polyurethans bei Temperaturen von 20 bis 80 °C, vorzugsweise von 20 bis 60 °C erfolgt, wobei gegebenenfalls die optionale Basislackschicht zuvor bei Temperaturen von 20 °C bis 80 °C getrocknet wurde.

Ein weiterer Gegenstand der vorliegenden Erfindung ist somit auch Polyurethan, das nach dem vorstehend beschriebenen Verfahren hergestellt wurde.

Ein weiterer Gegenstand der vorliegenden Erfindung ist somit auch die Verwendung des vorstehend beschriebenen erfindungsgemäßen Beschichtungsmittelsystems und/oder des nach einem vorstehend beschriebenen Verfahren hergestellten erfindungsgemäßen Polyurethans als Lack, bei der Automobillackierung, zur Reparatur von Lacken, zur Automobilreparaturlackierung und/oder zur Beschichtung von Automobilanbauteilen, von Kunststoffsubstraten oder von Nutzfahrzeugen, vorzugsweise ist der Lack ein Klarlack oder in pigmentierter Lack.

Da die aus den erfindungsgemäßen Beschichtungsmittelsystemen hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)Lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelsysteme kann durch alle üblichen Applikationsmethoden wie zum Beispiel Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die erfindungsgemäßen Beschichtungsmittel eignen sich hervorragend als dekorative, schützende und/oder effektgebende Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanischen Bauteilen sowie von Glashohlkörpern und Gegenständen des täglichen Bedarfs.

Die erfindungsgemäßen Beschichtungsmittelsysteme können daher beispielsweise auf ein gegebenenfalls vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelsysteme und Lackierungen, insbesondere die Klarlackierungen, in dem technologisch und ästhetisch besonders anspruchsvollen Gebiet der Automobilserienlackierung (OEM) und zur Beschichtung von Kunststoffanbauteilen für Pkw-Karosserien, insbesondere für Karosserien von Pkw der Oberklasse, wie zum Beispiel für die Herstellung von Dächern, Heckklappen, Motorhauben, Kotflügeln, Stoßstangen, Spoilern, Schwellern, Schutzleisten, seitlichen Verkleidungen u. Ä., sowie der Automobilreparaturlackierung und der Lackierung von Nutzfahrzeugen, wie beispielsweise von Lastkraftfahrzeugen, kettenbetriebenen Baufahrzeugen, wie zum Beispiel Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierten Polymethylmethacrylaten, insbesondere aus Blends aus ASA und Polycarbonaten, bevorzugt mit einem Polycarbonatanteil > 40%, insbesondere > 50%.

Unter "ASA" werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelsysteme in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A 0 692 007 und in den dort in Spalte 3, Zeilen 50 ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80 °C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200 °C während einer Zeit von 1 min bis zu 10 h eingebrannt, wobei bei den für die Automobilreparaturlackierung angewandten Temperaturen, die im Allgemeinen zwischen 20 und 80 °C, insbesondere zwischen 20 und 60 °C liegen, auch längere Härtzeiten zur Anwendung kommen können.

In einer weiteren bevorzugten Ausführungsform der Erfindung wird das erfindungsgemäße Beschichtungsmittelsystem als transparenter Klarlack zur Beschichtung von Kunststoffsubstraten, insbesondere von Kunststoffanbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (zum Beispiel Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

Ein weiterer Gegenstand der vorliegenden Erfindung ist somit auch ein Verfahren zur Erzeugung einer Beschichtung, wobei auf ein gegebenenfalls vorbeschichtetes Substrat oder auf eine Basislackschicht mindestens ein erfindungsgemäßes Beschichtungsmittelsystem aufgebracht wird.

Vorzugsweise umfasst die Beschichtung (Schicht) ein Polyurethan, das durch zumindest teilweises oder vollständiges Aushärten, vorzugsweise durch vollständiges Aushärten des Beschichtungsmittelsystems erhalten wird.

Ein weiterer Gegenstand der vorliegenden Erfindung ist somit auch eine Beschichtung (oder Schicht), die nach dem vorstehend beschriebenen Verfahren zur Erzeugung der Beschichtung erhältlich ist.

Ein weiterer Gegenstand der vorliegenden Erfindung ist somit auch die Verwendung von mindestens zwei Salzen einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist, als Katalysator in einem vorstehend beschriebenen erfindungsgemäßen Beschichtungsmittelsystem, zur Katalyse der Urethanreaktion in einem Beschichtungsmittelsystem, zur Herstellung von Polyurethanen, zur Herstellung eines Polyurethans gemäß den vorstehenden Ausführungen, zur Herstellung einer Beschichtung gemäß den vorstehenden Ausführungen, zur Herstellung eines Lacks, zur Automobilreparaturlackierung, und/oder zur Beschichtung von Automobilbauteilen, von Kunststoffsubstraten oder von Nutzfahrzeugen.

Nachfolgend wird die Erfindung anhand von Beispielen verdeutlicht.

### 1 Messung der Gelzeit

Die Messung der Gelzeit erfolgt durch Bewegen eines an einem Roboterarm befestigten Prüfstempels in der Lackmischung. Dieser Prüfstempel ist hergestellt aus einem handelsüblichen Gewindestab von 4mm Durchmesser auf dem mittels zweier Muttern eine Unterlegscheibe $d_2$= 12mm, h = 1mm befestigt ist. Dieser Gewindestab wird so an einem Roboterarm befestigt, dass die Unterlegscheibe in die Prüfmischung hineinragt. Durch eine Auf- und Ab- Bewegung (konstante Zeit und konstanter Weg) des Roboterarmes kann die zur Bewegung notwendige Energie protokolliert werden. Die Energie, die zur Bewegung des Prüfkörpers notwendig ist, ist abhängig von der Viskosität der umgebenden Lackmischung. Die Kalibrierung des Systems, um daraus dann einen Viskositätsgröße abzuleiten, erfolgt mit handelsüblichen Kalibrierölen.

| | |
|---|---|
| Gerätebezeichnung: Texture Analyser | TA.XT.Plus, Stable Micro Systems |
| Messbedingungen: | Vor-Geschwindigkeit: 1,00 mm/s |
| | Test-Geschwindigkeit: 5,00 mm/s |
| | Rückgeschwindigkeit: 5,00 mm/s |
| | Weg: 5,3 mm, Haltezeit: 1,00 s |

Die Messung erfolgt bei Normtemperatur (23°C).

Auswertung: die durch die Kalibrierung erhaltenen Messwerte werden gegen die Zeit aufgetragen. Durch Verbinden des Startwertes bis zu einer Viskosität von X erhält man über die Steigung der Geraden einen Wert, der die Reaktivität der Systeme beschreibt. In der Regel wird ein Wert von X = 1 Pa*s als Maximum herangezogen.

### 2 Onset-Temperatur (DMA-Untersuchungen)

Die Bestimmung der Vernetzungs-Onset-Temperatur auf Basis einer dynamisch mechanischen Analyse des Viskositätsverlaufes in Abhängigkeit von Temperatur und Zeit (DMA) wurden für unterschiedliche Katalysatorzusammensetzungen (Tabelle 3.1) gemessen. Dabei wurden die Messungen direkt nach Zugabe der Härterlösung zum Mischlack durchgeführt. Die Analyse des Viskositätsverlaufs erfolgte bei einem Temperaturbereich von 5°C bis 200°C. Die Auswertung erfolgte über die extrapolierte Onset-Temperaturlage des Netzwerkaufbaus aus dem E'-Verlauf (Speichermodul) und dem extrapolierten Netzwerkaufbaus aus dem tan-$\delta$-Verlauf (Verlustfaktor). Eine ausführliche Beschreibung der dynamisch mechanischen Analyse kann der Literatur entnommen werden. (siehe beispielsweise G. W. Ehrenstein, Praxis der thermischen Analyse von Kunststoffen / Gottfried W. Ehrenstein/Gabriela Riedel/Pia Trawiel, München : Hanser, 2003.)

**Thermische-Analyse** DMA Triton, Triton Technology Mettler Lacerta Technology

| | |
|---|---|
| Messbedingungen: | Frequenz: 1 Hz; Amplitude: 0,01 mm |
| | 2 °C/min von ca. 5 °C bis 200 °C |

### 3 Messung des NCO-Umsatzes

| | |
|---|---|
| **IR-Spektrometer** | FT-IR-Spektrometer 7000 e, Agilent |
| Messbereich: | 500 - 4000 cm$^{-1}$ |

Die katalytische Vernetzungsreaktion zwischen einer NCO-Gruppe (Polyisocyanat) und einer OH-Gruppe (beispielsweise OH-funktionelles Polyacrylat gemäß Komponente (A)) zur Ausbildung eines Polyurethans wird mittels beheizbarer horizontaler ATR-IR-Spektroskopie bei 60 °C untersucht. Die Messungen erfolgten dabei direkt nach Zugabe der Härterlösung zum Mischlack. Die erste Messung bei 40°C definiert den Ausgangspunkt. Anschließend wurde die Reaktion in 5-Minuten-Schritten über einen Zeitraum von 30 Minuten bei 60 °C kontrolliert. Die Aufheizphase bis 60 °C beträgt dabei ca. 5 Minuten. Anhand der Intensitätsabnahme der Bande des freien Isocyanates bei 2260 cm$^{-1}$ wurde der Umsatz ermittelt. Die Spektren wurden auf die Isocyanuratbande bei 1690 cm$^{-1}$ normiert.

Um eine leichtere Interpretation dieser Kurven zu erhalten, ist es notwendig, eine Vergleichsgröße zu erarbeiten.

Dazu wurde für die Vernetzungsreaktion zwischen einer NCO-Gruppe und einer OH-Gruppe zur Ausbildung einer Urethan-Gruppe eine Reaktion 2. Ordnung angenommen. Mit der Annahme, dass die Anfangskonzentration des Polyisocyanats und dem Polyol identisch sind, ergibt sich folgendes Reaktionsgeschwingkeitsgesetz:

$$-\frac{d[NCO]}{dt} = k \cdot [NCO]^2 \tag{4}$$

Die Gleichung 4 umgeformt ergibt:

$$d \frac{[NCO]}{[NCO]^2} = k \cdot dt \tag{5}$$

Das Integrieren der obigen Gleichung liefert:

$$-\int_{[NCO]_0}^{[NCO]} \frac{d[NCO]}{[NCO]^2} = k \cdot \int_0^t dt \tag{6}$$

Durch das Lösen des Integrals und durch das Einsetzen der Integrationsgrenzen ergibt sich folgende Geradengleichung:

$$\frac{1}{[NCO]} = k \cdot t + \frac{1}{[NCO]_0} \tag{7}$$

Die Auftragung der reziproken NCO-Konzentration gegen die Zeit t liefert eine Gerade, dessen Steigung die Reaktionsgeschwindigkeitskonstante k liefert (Gleichung 7). Die so ermittelte Reaktionsgeschwindigkeitskonstante wird der Anschaulichkeit halber mit dem Faktor $10^4$ multipliziert. Die so erhaltenen Werte haben nach Gleichung 7 somit die Dimension $10^{-4}$ L mol$^{-1}$ s$^{-1}$. Die Anfangskonzentration des Isocyanats betrug dabei 1,184 mol L$^{-1}$.

**4 Drying recorder:**

Auf Glastafeln der Dimension 280 mm x 25 mm wird der Lack mit Hilfe eines 100 $\mu$ Kastenrakels aufgezogen. Mit Hilfe des Byk-Dry-time Recorders werden bei Raumtemperatur (20 - 23°C) und einer relativen Luftfeuchte von 40 bis 60 % Nadeln mit einer definierten Geschwindigkeit über den Film gezogen. Es wird innerhalb von 5 Minuten nach dem Auftrag gestartet. Dabei werden 3 verschiedene Phasen sowie die Gesamtlänge (= Summe aus Phase 1 + Phase 2 + Phase 3) der Spur beurteilt.

Phase 1:    Die Nadel hinterlässt eine tiefe Furche im Lack
Phase 2:    Die Nadelspur führt zu einer deutlichen Verletzung der Oberfläche
Phase 3:    Die Nadel hinterlässt nur einen feinen Kratzer

Die Beurteilung wird immer gegen einen Standard vorgenommen.
Bewertung: Es wird immer das Ende der jeweiligen Phase in cm angegeben. Aus der Gesamtlänge aller Phasen und der jeweiligen Länge der Einzelphasen lassen sich Hypothesen ableiten.

**5 Komponenten**

**5.1 Komponente** A1

In einem 4l-Edelstahlreaktor in Druckausführung, ausgestattet mit zwei Zulaufgefäßen, einem Rückflusskühler und einem Rührorgan, werden 487 g Butylacetat vorgelegt. In einem der Zulaufgefäße wird eine Mischung aus 479 g Styrol, 242,2 g Methylmethacrylat, 164 g n-Butylacrylat, 298 g Butylmethacrylat, 33,4g Methacrylsäure sowie 763 g Hydroxypropylmethacrylat vorgelegt. In dem zweiten Zulaufgefäß werden 198 g tert-butyl-per-2-ethylhexanoat mit 86 g Butylacetat vorgelegt. Bei einem Druck von 3 bar absolut wird die Reaktorvorlage auf 140 °C aufgeheizt. Bei Erreichen der Temperatur wird der Initiatorzulauf gestartet, die Gesamtzulaufzeit beträgt 270 Minuten. 5 Minuten nach dem Start des Initiatorvorlaufes wird der Monomerenzulauf gestartet, dessen Zulaufzeit beträgt 240 Minuten. Nach Beendigung beider Zuläufe wird noch für 60 Minuten bei 140 °C gehalten, danach wird heruntergekühlt und entspannt. Mit Methylethylketon wird der Festkörper der Harzlösung auf 65 % $\pm$ 1 % eingestellt.

Das so synthetisierte Polyacrylatpolyol (in Form eines Festharzes) weist eine Säurezahl von 14,1 mg KOH/g Festharz sowie einen Festkörper von 64,0 % auf. Die Viskosität der Harzlösung liegt bei 3483 mPas, gemessen mit einem Rotationsviskosimeter (Brookfield CAP 2000, Spindel 3, 2500 s$^{-1}$).Die OH-Zahl errechnet sich zu 150 mg KOH/g (Festharz). Das Molekulargewicht des Harzes liegt bei Mn = 2608 D bzw. Mw = 5990 D (bestimmt mittels GPC / siehe unten).

Der Festkörper (Feststoffgehalt) wird folgendermaßen gemessen: Auf einem Blechdeckel mit einem Durchmesser von ca. 6 - 8 cm wird eine Polyacrylatpolyolprobe in Festharzform auf eine Analysenwaage in einer Menge von 1g aufgebracht. Nach Zugabe von 1ml eines geeigneten Lösungsmittels (Butylacetat) wird das Blech in einem Umluftofen bei 130°C für 60 Minuten getrocknet. Der verbleibende Rückstand stellt den Feststoffgehalt des Polyacrylatpolyols in Festharzform dar. Es wird jeweils eine Doppelbestimmung vorgenommen.

Die Gelpermeationschromatographie (GPC) wird bei 40 °C mit einer Hochdruckflüssigkeitschromatographie-Pumpe und einem Brechungsindexdetektor durchgeführt. Als Elutionsmittel wird Tetrahydrofuran mit einer Elutionsgeschwindigkeit von 1 ml/min verwendet. Die Kalibrierung wird mittels eines Poly-MMA Standards durchgeführt. Das zahlenmittlere Molekulargewicht Mn, das gewichtsmittlere Molekulargewicht Mw und Mp werden bestimmt, wobei sich der Polymolekularitätsindex Mp berechnet aus Mp = Mw/Mn.

### 5.2 Komponente A2

In einem 4I-Edelstahlreaktor in Druckausführung, ausgestattet mit zwei Zulaufgefäßen, einem Rückflusskühler und einem Rührorgan, werden 487 g Butylacetat vorgelegt. In einem der Zulaufgefäße wird eine Mischung aus 479 g Styrol, 275,6 g Methylmethacrylat, 164 g n-Butylacrylat, 298 g Butylmethacrylat sowie 763 g Hydroxypropylmethacrylat vorgelegt. In dem zweiten Zulaufgefäß werden 198 g tert-Butyl-per-2-ethylhexanoat mit 86 g Butylacetat vorgelegt. Bei einem Druck von 3 bar absolut wird die Reaktorvorlage auf 140 °C aufgeheizt. Bei Erreichen der Temperatur wird der Initiatorzulauf gestartet, die Gesamtzulaufzeit beträgt 270 Minuten. 5 Minuten nach dem Start des Initiatorvorlaufes wird der Monomerenzulauf gestartet, dessen Zulaufzeit beträgt 240 Minuten. Nach Beendigung beider Zuläufe wird noch für 60 Minuten bei 140 °C gehalten, danach wird heruntergekühlt und entspannt. Mit Methylethylketon wird der Festkörper der Harzlösung auf 64 % $\pm$ 1 % eingestellt.

Das so synthetisierte Polyacrylatpolyol (in Form eines Festharzes) weist eine Säurezahl von 1,5 mg KOH/g Festharz sowie einen Festkörper von 63,0 % auf. Die Viskosität der Harzlösung liegt bei 938 mPas, gemessen mit einem Rotationsviskosimeter (Brookfield CAP 2000, Spindel 3, 2500 s$^{-1}$). Die OH-Zahl errechnet sich zu 150 mg KOH/g (Festharz). Das Molekulargewicht des Harzes liegt bei Mn = 1654 bzw. Mw = 3989 D.

### 5.3 Härterlösung, entsprechend Komponente B

Mischung von 95 Teilen HMDI-trimer (NCO Gehalt 23,5 $\pm$ 0.5 %) mit 5 Teilen eines IPDI-trimers (NCO Gehalt 11,9 $\pm$ 0,4%) werden in einer Mischung aus Butylacetat und Xylol (1 : 1) auf 85 % Festkörpergehalt angelöst.

### 5.4 Verdünnung

1 : 1 Mischung aus Xylol/Butylacetat (Lösungsmittel)

### 5.5 Katalysator (Komponente C)

Zur Herstellung der Katalysatorkomponente werden die entsprechenden Hydroxide der genannten Alkali- und Erdalkalimetalle in einem Überschuß an Neodecansäure aufgelöst. Unter Zugabe von Xylol als Schleppmittel wird das entstandene Wasser an einem Rotationsviskosimeter abdestilliert. Die Überschussmenge an Neodecansäure wird so gewählt, das etwa 50%ige Lösungen des Metallsalzes in Neodecansäure erhalten werden. Der Metallgehalt wurde analytisch mittels ICP bestimmt. Die Lösungen sind über lange Zeit kristallisationsstabil.

C1: Bi-Neodecanoat in Neodecansäure mit einem Metallgehalt von 23% Bismut

C2: Ca-Neodecanoat in Neodecansäure mit einem metallgehalt von 5% Calcium

C3: K-Neodecanoat in Neodecansäure mit einem Metallgehalt von 5,7 % Kalium

C4: Na-Neodecanoat in Neodecansäure mit einem Metallgehalt von 5,9% Natrium

C6: Mg-Neodecanoat in Neodecansäure mit einem Metallgehalt von 3,6% Magnesium

C7: Tib-Kat 716 der Firma TIB Chemicals, Mannheim (DOTL). Hierbei handelt es sich um einen Zinn (Sn)-haltigen Katalysator, der Dioktylzinndilaurat enthält, aber keine weiteren Metallkomponenten, wie Bi, K, Na, Ca oder Mg.

**5.6 Lackrezeptur = Mischlack**

Tabelle 1

| 1 | Komponente A* | 85,1 |
|---|---|---|
| 2 | Ethylethoxypropionat | 8,75 |
| 3 | Tinuvin 292 BASF SE | 0,9 |
| 4 | Hydroxyphenylalkylbenzotriazol | 1,3 |
| 5 | Katalysatorlösung** | |
| 6 | Komponente B | 32 |
| 7 | Verdünnung | 32 |

Die Angaben der Konzentrationen sind Absolutmengen (in Teilen ausgedrückt), bezogen auf die gesamte Lackformulierung.

*durch Kombination der beiden Bindemittel A1 und A2 lassen sich die entsprechenden Säurezahlen einstellen. Beispielsweise ergibt sich bei 100 Teilen Komponente A1 eine Säurezahl von ca 15 mg KOH/g.

Eine Mischung der beiden Komponenten A1 und A2 zu gleichen Teilen ergibt eine Säurezahl von 8 mg KOH/g. Analog erhält man bei Verwendung nur der Komponente A2 eine Säurezahl von 1,5 mg KOH/g.

**In der Tabelle 2 sind die jeweiligen Mengen der Metalle in mmol angegeben, basierend auf den Katalysatordefinitionen C1 - C7. Aus der Zusammensetzung der jeweiligen Katalysatorlösungen lassen sich entsprechend die eingesetzten Mengen berechnen.

Zur Herstellung der Lacke werden die Positionen 1-4 gemäß Tabelle 1 unter Rühren zusammengegeben. Nach Zugabe der entsprechenden Katalysatorlösung wird die Komponente B zugegeben. Die Position 7 kann ganz oder teilweise dazu verwendet werden, die Katalysatorlösung zwecks besserer Handhabbarkeit zu verdünnen. Gleiches gilt für eine ggfs. erforderliche Verdünnung der Komponente B. Die Komponente 7 kann generell an irgendeiner Stelle der Rezeptur zugefügt werden. Im Fall des Vergleichsbeispiels V1 wird zusätzlich noch Benzoesäure zu 1,14 Teilen in der Lackrezeptur verwendet. Benzoesäure wird im Anschluss an die Katalysatorzugabe und vor Zugabe der Position 7 in dem Gemisch der Positionen 1 bis 5 unter Rühren gelöst.

Tabelle 2

| Bsp. | | SZ | Bi | Li | K | Na | Ca | Mg |
|---|---|---|---|---|---|---|---|---|
| | | | | | | | | |
| V1 | DOTL | 15 | | | | | | |
| V2 | Bi/Li | 15 | 0,2 | 3,0 | | | | |
| V3 | Bi | 15 | 0,3 | | | | | |
| E1 | Bi/K | 15 | 0,5 | | 0,05 | | | |
| E2 | Bi/K | 8 | 0,28 | | 1,15 | | | |
| E3 | Bi/Ca | 1 | 0,28 | | | | 1,03 | |
| E4 | Bi/Ca | 8 | 0,28 | | | | 1,03 | |

EP 3 526 268 B1

(fortgesetzt)

| Bsp. | | SZ | Bi | Li | K | Na | Ca | Mg |
|------|------|----|----|----|----|----|----|----|
| E5 | Bi/Na | 15 | 0,5 | | | 0,05 | | |
| E6 | Bi/Mg | 8 | 0,275 | | | | | 0,05 |
| E7 | Bi/Mg | 15 | 0,275 | | | | | 1,575 |
| E8 | Bi/Mg | 15 | 0,05 | | | | | 3,1 |
| E9 | Bi/Mg | 1 | 0,275 | | | | | 1,575 |
| V4 | Bi | 20 | 0,3 | | | | | |
| V5 | Bi | 25 | 0,3 | | | | | |
| E10 | Bi/Na | 1 | 0,5 | | | 0,05 | | |
| E11 | Bi/Na | 8 | 0,5 | | | 0,05 | | |
| V6 | Bi/Na | 20 | 0,5 | | | 0,05 | | |
| V7 | Bi/Na | 25 | 0,5 | | | 0,05 | | |
| E14 | Bi/Mg | 1 | 0,275 | | | | | 0,05 |
| E15 | Bi/Mg | 15 | 0,275 | | | | | 0,05 |
| V8 | Bi/Mg | 20 | 0,275 | | | | | 0,05 |
| V9 | Bi/Mg | 25 | 0,275 | | | | | 0,05 |
| E18 | Bi/Mg | 8 | 0,275 | | | | | 1,575 |
| V10 | Bi/Mg | 20 | 0,275 | | | | | 1,575 |
| V11 | Bi/Mg | 25 | 0,275 | | | | | 1,575 |
| E21 | Bi/Ca | 15 | 0,28 | | | | 1,03 | |
| V12 | Bi/Ca | 20 | 0,28 | | | | 1,03 | |
| V13 | Bi/Ca | 25 | 0,28 | | | | 1,03 | |
| E24 | Bi/K | 15 | 0,28 | | 1,15 | | | |
| V14 | Bi/K | 20 | 0,28 | | 1,15 | | | |
| V15 | Bi/K | 25 | 0,28 | | 1,15 | | | |
| SZ = Säurezahl in mg KOH/g (Feststoffgehalt) aus dem Mischungsverhältnis Komponente A1 und A2<br>Konz der Metalle: jeweils in mmol (Metall) auf Gesamtmischung<br>V1 bis V15 sind Vergleichsbeispiele und E1 bis E24 Ausführungsbeispiele | | | | | | | | |

**6 Ergebnisse/Diskussion**

a) Tabelle 3

| | Onset | K *10$^{-4}$ | M [Gel] | DR P1 [cm] | DR P2 [cm] | DR P3 [cm] |
|------|-------|-------|---------|-----------|-----------|-----------|
| | [°C] | [L moi$^{-1}$ s$^{-1}$] | | | | |
| V1 | 53 | 12 | 16 | 5,4 | 9,9 | 13,6 |
| V2 | 42 | 27 | 19 | 7,5 | 11,1 | 20,2 |
| V3 | 78 | 7,8 | -- | 8,9 | 14,7 | 29,1 |
| E1 | 39 | 12 | 21 | 2,3 | 4,8 | 9 |
| E2 | 48 | 7 | 6 | 6,9 | 10,6 | 17,6 |

(fortgesetzt)

|  | Onset | K *10⁻⁴ | M [Gel] | DR P1 [cm] | DR P2 [cm] | DR P3 [cm] |
|---|---|---|---|---|---|---|
|  | [°C] | [L mol⁻¹ s⁻¹] |  |  |  |  |
| E3 | 40 | 22 | 16 | 8,6 | 15,6 | 22,6 |
| E4 | 41 | 13 | 21 | 3,2 | 6,2 | 8,2 |
| E5 | 39 | 11 | 65 | 3 | 4,6 | 11,8 |
| E6 | 44 | 9 | 16 | 5,4 | 9,2 | 11,5 |
| E7 | 47 | 16 | 13 | 5 | 6,7 | 14,5 |
| E8 | 56 | 12 | 12 | 8,5 | 15,8 | 17 |
| E9 | 42 | 25 | 18 | 4,4 | 6,6 | 10,2 |
| DR P1 = Drying Recorder Ende der Phase 1 <br> DR P2 = Drying Recorder Ende der Phase 2 <br> DR P3 = Drying Recorder Ende der Phase 3 | | | | | | |

Die Bewertung der unterschiedlichen Phasen 1 bis 3 ist unter Ziffer 4 erklärt.

Die Untersuchungen gemäß Tabelle 3 ergeben ein Bild über die Trocknungseigenschaften der Lackfilme. Bei der Vernetzung bei niedrigen Temperaturen ist es gewünscht, dass einerseits die Vernetzung sehr früh startet (Onset-Temperatur niedrig), andererseits soll aber die Reaktionsgeschwindigkeit bei Raumtemperatur nicht so schnell sein, dass diese sich negativ auf die Verarbeitungszeit auswirkt (Gelzeit moderat).

Die Messung des Abbaus an NCO-Gruppen (hoher Wert!) per IR-spektroskopischer Untersuchung gibt dann einen Hinweis auf die Vernetzungseigenschaften des Lackfilms bei erhöhter Temperatur. Dabei ist es erwünscht, dass die Lackfilme nach einer Zeit X nur noch einen geringen Gehalt an detektierbaren NCO-Gruppen aufweisen. Diese Messung gibt dann einen Hinweis auf den Vernetzungsgrad des Lackfilmes am Ende der forcierten Trocknung.

Die Ergebnisse aus den Versuchen mit der Methode des Drying recorders zeigen, dass die Eigenschaften der Filme in der Phase 1 ableitbar sind aus den beiden Größen Onset-Temperatur und Gelzeit. Sehr niedrige Onset-Temperaturen zeigen erst bei gleichzeitig hohem Wert der Gelzeit eine kurze Phase 1. Anhand der Länge der Phase 3, die einen Hinweis auf das Erreichen der Montagefestigkeit gibt, kann man erkennen, dass die Kombination der einzelnen Metalle genutzt werden kann, die Lackeigenschaften auf die jeweiligen Bedürfnisse einzustellen.

Anders als bei den bislang üblich Zinn-haltigen Katalysatoren lassen sich bei der Lackapplikation mit den erfindungsgemäßen Beschichtungssystemen Vernetzung und Potlife unabhängig voneinander einstellen. Somit stellt die neue Kombination von Metallen gemäß der Katalysatorkomponente (C) eine Möglichkeit dar, ein System auf die Kundenerfordernisse hin zu modellieren. Weiterhin ist eine funktionierende Alternative zu den Li-haltigen Katalysatoren gefunden worden. Gegenüber den nur auf Bi basierenden Katalysatoren, die über eine vergleichsweise sehr hohe Onset-Temperatur verfügen, weisen die erfindungsgemäßen Katalysatoren den Vorteil auf, dass die jeweiligen Lackrezepturen bei der Applikation schneller trocknen.

b) Tabelle 4

|  |  | SZ | DR P1 [cm] | DR P2 [cm] | DR P1+P2 [cm] |
|---|---|---|---|---|---|
| V3 | Bi | 15 | 8,9 | 14,7 | 23,6 |
| V4 | Bi | 20 | 4,4 | 5,5 | 9,9 |
| V5 | Bi | 25 | 5 | 6,9 | 11,9 |
| E3 | Bi/Ca | 1 | 8,6 | 15,6 | 24,2 |
| E4 | Bi/Ca | 8 | 3,2 | 6,2 | 9,4 |
| E21 | Bi/Ca | 15 | 5,1 | 4,5 | 9,6 |
| V12 | Bi/Ca | 20 | 4,2 | 4,1 | 8,3 |
| V13 | Bi/Ca | 25 | 5 | 4,4 | 9,4 |
| E10 | Bi/Na | 1 | 9,6 | 6 | 15,6 |

(fortgesetzt)

|  |  | SZ | DR P1 [cm] | DR P2 [cm] | DR P1+P2 [cm] |
|---|---|---|---|---|---|
| E11 | Bi/Na | 8 | 3,8 | 4,7 | 8,5 |
| E5 | Bi/Na | 15 | 3 | 4,6 | 7,6 |
| V6 | Bi/Na | 20 | 2,8 | 3,2 | 6 |
| V7 | Bi/Na | 25 | 3 | 5,3 | 8,3 |
| E14 | Bi/Mg | 1 | 11,8 | 12,5 | 24,3 |
| E6 | Bi/Mg | 8 | 5,4 | 9,2 | 14,6 |
| E15 | Bi/Mg | 15 | 6,5 | 6,8 | 13,3 |
| V8 | Bi/Mg | 20 | 5,5 | 9,9 | 15,4 |
| V9 | Bi/Mg | 25 | 5,3 | 6,5 | 11,8 |
| E9 | Bi/Mg | 1 | 4,4 | 6,6 | 11 |
| E18 | Bi/Mg | 8 | 4 | 3,3 | 7,3 |
| E7 | Bi/Mg | 15 | 5 | 6,7 | 11,7 |
| V10 | Bi/Mg | 20 | 5 | 4,8 | 9,8 |
| V11 | Bi/Mg | 25 | 4,7 | 5,4 | 10,1 |
| E2 | Bi/K | 8 | 6,9 | 10,6 | 17,5 |
| E24 | Bi/K | 15 | 9,2 | 5,2 | 14,4 |
| V14 | Bi/K | 20 | 7,3 | 7,3 | 14,6 |
| V15 | Bi/K | 25 | 9 | 7,5 | 16,5 |
| DR P1+P2 = Summe aus Phase 1 und Phase 2 | | | | | |

Die Versuche mit der Methode des Drying recorders gemäß Tabelle 4 ergeben ein Bild über die Trocknungseigenschaften der Lackfilme bei unterschiedlicher Säurezahl aus dem Mischungsverhältnis der beiden Komponenten A1 und A2. Dabei werden insbesondere die Längen der Phasen 1 und 2 untersucht.

Die Länge der Phase 1 gibt einen Hinweis, wie schnell der Lackfilm von einem nicht vernetzten in einen anvernetzten Zustand übergeht. Der Übergang ist der Punkt, an dem der Lackfilm nicht mehr gelartig an der Linie sichtbar ist und die Nadel den Lack nicht mehr komplett "zerteilt".

In der Phase 2 ist der Lack bereits weitgehend vernetzt, aber noch berührungsempfindlich. In dieser Zeit wären Montagearbeiten an einem lackierten Teil wie beispielsweise an einem Kotflügel noch nicht möglich. Erst zum Schluss der Phase 2 können leichte Montagearbeiten durchgeführt werden ohne die Lackoberfläche zu verletzen.

Die Beispiele aus Tabelle 4 zeigen, dass mit den erfindungsgemäßen Beschichtungsmittelsystemen zufriedenstellende Trocknungen bereits bei Säurezahlen ≤ 15 mg KOH/g erreicht werden können. Mit einem System, katalysiert allein mit Bi als katalytisch aktiver Metallkomponente, sind zufriedenstellende Trocknungen erst bei Säurezahlen > 15 mg KOH/g erreichbar (siehe beispielsweise V4 und E4).

Es wurde darüber hinaus festgestellt, dass die Beschichtungsmittelsysteme bei Verwendung von polyhydroxygruppenhaltigen Verbindungen, die Säurezahlen von nicht mehr als 15 mg KOH/g aufweisen, eine höhere Wasser- und damit Wetterbeständigkeit besitzen.

**Patentansprüche**

1. Beschichtungsmittelsystem umfassend die Komponenten (A) bis (C) mit

(A) mindestens einer polyhydroxygruppenhaltigen Verbindung, wobei die Säurezahl der polyhydroxygruppenhaltigen Verbindung gemäß Komponente (A) nicht mehr als 15 mg KOH/g der entsprechenden polyhydroxygruppenhaltigen Verbindung beträgt und wobei die polyhydroxygruppenhaltige Verbindung gemäß der Komponente (A) ausgewählt ist aus der Gruppe der Polyacrylatpolyole und/oder der Polymethacrylatpolyole,

(B) mindestens einer polyisocyanathaltigen Verbindung und
(C) als Katalysator mindestens zwei Salze einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist,

wobei

i) die Komponenten (A), (B) und (C) getrennt voneinander vorliegen oder
ii) vollständig oder zumindest teilweise miteinander vermischt sind.

2. Beschichtungsmittelsystem gemäß Anspruch 1, **dadurch gekennzeichnet, dass** der Katalysator gemäß Komponente (C)

i) hergestellt wird durch Umsetzung der entsprechenden Hydroxide von Bi, Mg, Na, K und/oder Ca mit mindestens einer aliphatischen Monocarbonsäure mit mindestens vier Kohlenstoffatomen, vorzugsweise mit einem Überschuss an mindestens einer aliphatischen Monocarbonsäure und/oder unter Verwendung eines aromatischen Lösungsmittels, insbesondere Xylol, als Schleppmittel zur Entfernung von Wasser, und/oder
ii) das erste Salz und das zweite Salz dieselbe aliphatische Monocarbonsäure als Anionenkomponente des jeweiligen Salzes aufweisen, und/oder
iii) dass das zweite Salz als Metallkomponente Natrium und/oder Kalium aufweist.

3. Beschichtungsmittelsystem gemäß Anspruch 1 oder 2, **dadurch gekennzeichnet, dass** im Beschichtungsmittelsystem
die polyisocyanathaltige Verbindung gemäß Komponente (B) ausgewählt ist aus 1,6-Hexamethylendiisocyanat, Isophorondiisocyanat, 4,4'-Methylendicyclohexyldiisocyanat, den Biuret-Dimeren der vorgenannten Diisocyanate, den Iminooxadiazindionen der vorgenannten Diisocyanate und/oder den asymmetrischen Trimeren der vorgenannten Diisocyanate.

4. Beschichtungsmittelsystem gemäß einem der Ansprüche 1 bis 3, **dadurch gekennzeichnet, dass** das Beschichtungsmittelsystem mindestens eine weitere Komponente (D) bis (J) umfasst, die ausgewählt ist aus hydroxylgruppenhaltigen Verbindungen (D), Aminoplastharzen und/oder Tris(Alkoxycarbonyl-amino)Triazinen (E), Lackadditiven (F), aromatischen Carbonsäuren (G), Pigmenten (H), sonstigen Füllstoffen (I) und/oder Lösungsmitteln (J), wobei

i) die einzelnen Komponenten (D) bis (J) getrennt voneinander vorliegen oder
ii) vollständig oder zumindest teilweise miteinander und/oder mit den Komponenten (A) bis (C) vermischt sind,

vorzugsweise umfasst das Beschichtungsmittelsystem mindestens eine weitere Komponente ausgewählt aus hydroxylgruppenhaltigen Verbindungen (D), Lackadditiven (F), Pigmenten (H) und/oder Lösungsmitteln (J).

5. Beschichtungsmittelsystem gemäß einem der Ansprüche 1 bis 4, **dadurch gekennzeichnet, dass**

i) das Beschichtungsmittelsystem nicht wässrig ist, und/oder
ii) die Komponenten (A) und/oder (B) jeweils ein Gemisch mit mindestens einem Lösungsmittel (J) ausbilden, wobei aber die Komponenten (A) und (B) getrennt voneinander vorliegen, und/oder
iii) der Katalysator gemäß Komponente (C) ganz oder zumindest teilweise in mindestens einer der getrennt voneinander vorliegenden Komponenten (A) oder (B), vorzugsweise in Komponente (A), enthalten ist.

6. Beschichtungsmittelsystem gemäß einem der Ansprüche 1 bis 5, **dadurch gekennzeichnet, dass** im Katalysator gemäß Komponente (C) die aliphatische Monocarbonsäure eine $C_6$-$C_{18}$-Carbonsäure ist, insbesondere ein Mg-octoat, Ca-octoat, K-octoat, Bi-octoat oder Na-octoat, ein Mg-, Ca-, K-, Na- oder Bi-Salz der $C_{10}$-Neodekansäure und/oder ein Mg-, Ca-, K-, Na- oder Bi-Salz der $C_9$-Neononansäure.

7. Beschichtungsmittelsystem gemäß einem der Ansprüche 4 bis 6, **dadurch gekennzeichnet, dass** das Beschichtungsmittelsystem als zusätzliche Komponente mindestens ein Lackadditiv (F), vorzugsweise mindestens einen Entschäumer, enthält.

8. Beschichtungsmittelsystem gemäß einem der Ansprüche 1 bis 7, **dadurch gekennzeichnet, dass** das Beschichtungsmittelsystem als vollständiges Gemisch der Komponenten (A), (B) und (C) sowie der gegebenenfalls vorhandenen Komponenten (D) bis (J) vorliegt.

9. Verfahren zur Herstellung eines Beschichtungsmittelsystems gemäß Anspruch 8, **dadurch gekennzeichnet, dass** die Komponenten (A), (B) und (C) sowie die gegebenenfalls vorhandenen Komponenten (D) bis (J) getrennt voneinander bereitgestellt und anschließend miteinander vermischt werden,
vorzugsweise erfolgt das Vermischen bei Raumtemperatur, die Komponenten (A) und (C) werden vorab miteinander gemischt und/oder die Komponente (B) wird in die Komponente (A) oder ein die Komponente (A) enthaltendes Gemisch zugegeben.

10. Verfahren zur Herstellung eines Polyurethans durch zumindest teilweise oder vollständige Aushärtung, vorzugsweise durch vollständige Aushärtung des Beschichtungsmittelsystems gemäß Anspruch 8.

11. Verfahren gemäß Anspruch 10, **dadurch gekennzeichnet, dass** das Polyurethan eine Schicht oder Beschichtung ausbildet oder zumindest Bestandteil einer Schicht oder Beschichtung ist, vorzugsweise ist die Schicht oder Beschichtung eine Lackschicht.

12. Verfahren gemäß Anspruch 10 oder 11, **dadurch gekennzeichnet, dass** das Polyurethan mindestens ein Pigment (H) enthält und/oder dass das Polyurethan auf einer Basislackschicht, die gegebenenfalls mindestens ein Pigment (H) enthält, oder auf einem gegebenenfalls vorbeschichteten Substrat schichtförmig aufgebracht ist.

13. Verfahren gemäß einem der Ansprüche 10 bis 12, **dadurch gekennzeichnet, dass** die Aushärtung des Polyurethans bei Temperaturen von 20 bis 80 °C, vorzugsweise von 20 bis 60 °C, erfolgt, wobei gegebenenfalls die optionale Basislackschicht zuvor bei Temperaturen von 20 °C bis 80 °C getrocknet wurde.

14. Verwendung eines Beschichtungsmittelsystems gemäß einem der Ansprüche 1 bis 8 oder eines Polyurethans, das nach einem Verfahren gemäß einem der Ansprüche 10 bis 11 hergestellt wurde, als Lack, bei der Automobillackierung, zur Reparatur von Lacken, zur Automobilreparaturlackierung und/oder zur Beschichtung von Automobilanbauteilen, von Kunststoffsubstraten oder von Nutzfahrzeugen, vorzugsweise ist der Lack ein Klarlack oder ein pigmentierter Lack.

15. Verfahren zur Erzeugung einer Beschichtung, **dadurch gekennzeichnet, dass** auf ein gegebenenfalls vorbeschichtetes Substrat oder auf eine Basislackschicht mindestens ein Beschichtungsmittelsystem gemäß einem der Ansprüche 1 bis 8 aufgebracht wird.

16. Verfahren gemäß Anspruch 15, **dadurch gekennzeichnet, dass** die Beschichtung ein Polyurethan umfasst, das durch zumindest teilweises oder vollständiges Aushärten, vorzugsweise durch vollständiges Aushärten des Beschichtungsmittelsystems erhalten wird.

17. Verwendung von mindestens zwei Salzen einer aliphatischen Monocarbonsäure mit mindestens vier Kohlenstoffatomen, wobei das erste Salz als Metallkomponente Bismut (Bi) aufweist und das zweite Salz als Metallkomponente Magnesium (Mg), Natrium (Na), Kalium (K) oder Calcium (Ca) aufweist, als Katalysator in einem Beschichtungsmittelsystem zur Katalyse der Urethanreaktion in einem Beschichtungsmittelsystem, zur Herstellung von Polyurethanen, zur Herstellung eines Polyurethans gemäß einem der Ansprüche 10 bis 13, zur Herstellung eines Lacks, zur Reparatur eines Lacks, zur Automobilreparaturlackierung und/oder zur Beschichtung von Automobilanbauteilen, von Kunststoffsubstraten oder von Nutzfahrzeugen, wobei das Beschichtungsmittelsystem gemäß einem der Ansprüche 1 bis 8 definiert ist und die Komponenten (A) und (B) umfasst, mit

(A) mindestens einer polyhydroxygruppenhaltigen Verbindung, wobei die Säurezahl der polyhydroxygruppenhaltigen Verbindung gemäß Komponente (A) nicht mehr als 15 mg KOH/g der entsprechenden polyhydroxygruppenhaltigen Verbindung beträgt und wobei die polyhydroxygruppenhaltige Verbindung gemäß der Komponente (A) ausgewählt ist aus der Gruppe der Polyacrylatpolyole und/oder der Polymethacrylatpolyole,
(B) mindestens einer polyisocyanathaltigen Verbindung.

## Claims

1. A coating material system comprising components (A) to (C), having:

(A) at least one polyhydroxy group-containing compound, where the acid number of the polyhydroxy group-containing compound of component (A) is not more than 15 mg KOH/g of the corresponding polyhydroxy group-containing compound and where the polyhydroxy group-containing compound of component (A) is selected from the group of the polyacrylate polyols and/or the polymethacrylate polyols,

(B) at least one polyisocyanate-containing compound, and

(C) as catalyst at least two salts of an aliphatic monocarboxylic acid having at least four carbon atoms, the metal component of the first salt comprising bismuth (Bi), and the metal component of the second salt comprising magnesium (Mg), sodium (Na), potassium (K) or calcium (Ca),

where

i) components (A), (B), and (C) are present separately from one another or
ii) are mixed wholly or at least partly with one another.

2. The coating material system according to claim 1, wherein the catalyst of component (C)

i) is produced by reaction of the corresponding hydroxides of Bi, Mg, Na, K and/or Ca with at least one aliphatic monocarboxylic acid having at least four carbon atoms, preferably with an excess of at least one aliphatic monocarboxylic acid, and/or using an aromatic solvent, more particularly xylene, as azeotrope former for removing water, and/or
ii) the first salt and the second salt have the same aliphatic monocarboxylic acid as anion component of the respective salt, and/or
iii) wherein the metal component of the second salt comprises sodium and/or potassium.

3. The coating material system according to claim 1 or 2, wherein in the coating material system the polyisocyanate-containing compound of component (B) is selected from 1,6-hexamethylene diisocyanate, isophorone diisocyanate, 4,4'-methylenedicyclohexyl diisocyanate, the biuret dimers of the aforesaid diisocyanates, the iminooxadiazinediones of the aforesaid diisocyanates and/or the asymmetrical trimers of the aforesaid diisocyanates.

4. The coating material system according to any of claims 1 to 3, wherein the coating material system comprises at least one further component (D) to (J), selected from hydroxyl-containing compounds (D), aminoplast resins and/or tris(alkoxycarbonylamino)triazines (E), coatings additives (F), aromatic carboxylic acids (G), pigments (H), other fillers (I) and/or solvents (J), where

i) the individual components (D) to (J) are present separately from one another or
ii) are mixed wholly or at least partly with one another and/or with components (A) to (C),

the coating material system preferably comprising at least one further component selected from hydroxyl-containing compounds (D), coatings additives (F), pigments (H) and/or solvents (J).

5. The coating material system according to any of claims 1 to 4, wherein

i) the coating material system is not aqueous, and/or
ii) components (A) and/or (B) each form a mixture with at least one solvent (J), but components (A) and (B) are present separately from one another, and/or
iii)the catalyst of component (C) is present entirely or at least partly in at least one of the components (A) or (B) present separately from one another, preferably in component (A).

6. The coating material system according to any of claims 1 to 5, wherein the aliphatic monocarboxylic acid in the catalyst of component (C) is a $C_6$-$C_{18}$ carboxylic acid, more particularly an Mg octoate, Ca octoate, K octoate, Bi octoate or Na octoate, an Mg, Ca, K, Na or Bi salt of $C_{10}$ neodecanoic acid and/or an Mg, Ca, K, Na or Bi salt of $C_9$ neononanoic acid.

7. The coating material system according to any of claims 4 to 6, wherein the coating material system comprises as additional component at least one coatings additive (F), preferably at least one defoamer.

8. The coating material system according to any of claims 1 to 7, wherein the coating material system is present as a complete mixture of components (A), (B), and (C) and also of optionally present components (D) to (J) .

9. A method for producing a coating material system according to claim 8, wherein components (A), (B), and (C) and also optionally present components (D) to (J) are provided separately from one another and subsequently mixed with one another,
the mixing taking place preferably at room temperature, with components (A) and (C) being mixed with one another beforehand and/or component (B) being added to component (A) or to a mixture comprising component (A).

10. A method for producing a polyurethane by at least partial or complete curing, preferably by complete curing, of the coating material system according to claim 8.

11. The method according to claim 10, wherein the polyurethane forms a layer or coating or is at least part of a layer or coating, the layer or coating preferably being a coating-material film.

12. The method according to claim 10 or 11, wherein the polyurethane comprises at least one pigment (H) and/or wherein the polyurethane is applied in coat form to a basecoat film which optionally comprises at least one pigment (H), or to an optionally precoated substrate.

13. The method according to any of claims 10 to 12, wherein the polyurethane is cured at temperatures of 20 to 80°C, preferably of 20 to 60°C, the optional basecoat film having optionally been dried beforehand at temperatures of 20°C to 80°C.

14. The use of a coating material system according to any of claims 1 to 8 or of a polyurethane produced by a method according to either of claims 10 and 11 as coating material, in automotive finishing, for the repair of finishes, for automotive refinishing and/or for the coating of parts for installation in or on automobiles, of plastics substrates, or of commercial vehicles, the coating material preferably being a clearcoat or a pigmented paint.

15. A method for producing a coating, wherein at least one coating material system according to any of claims 1 to 8 is applied to an optionally precoated substrate or to a basecoat film.

16. The method according to claim 15, wherein the coating comprises a polyurethane obtained by at least partial or complete curing, preferably by complete curing, of the coating material system.

17. The use of at least two salts of an aliphatic monocarboxylic acid having at least four carbon atoms, the metal component of the first salt comprising bismuth (Bi) and the metal component of the second salt comprising magnesium (Mg), sodium (Na), potassium (K) or calcium (Ca), as catalyst in a coating material system, for catalyzing the urethane reaction in a coating material system, for producing polyurethanes, for producing a polyurethane according to any of claims 10 to 13, for producing a coating material, for repairing a finish, for automotive refinishing and/or for coating parts for installation in or on automobiles, for coating plastics substrates or for coating commercial vehicles, the coating material system being defined according to any of claims 1 to 8 and comprising components (A) and (B), with

(A) at least one polyhydroxy group-containing compound, where the acid number of the polyhydroxy group-containing compound of component (A) is not more than 15 mg KOH/g of the corresponding polyhydroxy group-containing compound and where the polyhydroxy group-containing compound of component (A) is selected from the group of the polyacrylate polyols and/or the polymethacrylate polyols,
(B) at least one polyisocyanate-containing compound.

## Revendications

1. Système d'agent de revêtement comprenant les composants (A) à (C),

(A) représentant au moins un composé contenant des groupes polyhydroxy, l'indice d'acide du composé contenant des groupes polyhydroxy selon le composant (A) n'étant pas supérieur à 15 mg de KOH/g du composé contenant des groupes polyhydroxy correspondant et le composé contenant des groupes polyhydroxy selon le composant (A) étant choisi dans le groupe des polyacrylate-polyols et/ou des polyméthacrylate-polyols,
(B) représentant au moins un composé contenant polyisocyanate et
(C) représentant, comme catalyseur, au moins deux sels d'un acide monocarboxylique aliphatique comprenant au moins quatre atomes de carbone, le premier sel présentant du bismuth (Bi) en tant que composant métallique et le deuxième sel présentant du magnésium (Mg), du sodium (Na), du potassium (K) ou du calcium (Ca) en tant que composant métallique,

dans lequel

i) les composants (A), (B) et (C) se trouvent séparément les uns des autres ou
ii) sont mélangés complètement ou au moins partiellement les uns avec les autres.

2. Système d'agent de revêtement selon la revendication 1, **caractérisé en ce que** le catalyseur selon le composant (C)

i) est préparé par transformation des hydroxydes correspondants du Bi, Mg, Na, K et/ou Ca avec au moins un acide monocarboxylique aliphatique comprenant au moins quatre atomes de carbone, de préférence avec un excès d'au moins un acide monocarboxylique aliphatique et/ou à l'aide d'un solvant aromatique, en particulier le xylène, en tant qu'agent d'entraînement pour éliminer l'eau et/ou
ii) **en ce que** le premier sel et le deuxième sel présentent le même acide monocarboxylique aliphatique comme composant anionique du sel respectif et/ou
iii) **en ce que** le deuxième sel présente du sodium et/ou du potassium comme composant métallique.

3. Système d'agent de revêtement selon la revendication 1 ou 2, **caractérisé en ce que**, dans le système d'agent de revêtement, le composé contenant polyisocyanate selon le composant (B) est choisi parmi le diisocyanate de 1,6-hexaméthylène, le diisocyanate d'isophorone, le diisocyanate de 4,4'-méthylènedicyclohexyle, les dimères de biuret des diisocyanates susmentionnés, les iminooxadiazinediones des diisocyanates susmentionnés et/ou les trimères asymétriques des diisocyanates susmentionnés.

4. Système d'agent de revêtement selon l'une quelconque des revendications 1 à 3, **caractérisé en ce que** le système d'agent de revêtement comprend au moins un autre composant (D) à (J) qui est choisi parmi les composés contenant des groupes hydroxyle (D), les résines d'aminoplaste et/ou les tris(alcoxycarbonylamino)triazines (E), les additifs pour vernis (F), les acides carboxyliques aromatiques (G), les pigments (H), d'autres charges (I) et/ou solvants (J), dans lequel

i) les différents composants (D) à (J) se trouvent séparément les uns des autres ou
ii) sont mélangés complètement ou au moins partiellement les uns avec les autres et/ou avec les composants (A) à (C),

de préférence, le système d'agent de revêtement comprend au moins un autre composant choisi parmi les composés contenant des groupes hydroxyle (D), les additifs pour vernis (F), les pigments (H) et/ou les solvants (J).

5. Système d'agent de revêtement selon l'une quelconque des revendications 1 à 4, **caractérisé en ce que**

i) le système d'agent de revêtement n'est pas aqueux et/ou
ii) les composants (A) et/ou (B) forment à chaque fois un mélange avec au moins un solvant (J), les composants (A) et (B) se trouvant cependant séparément l'un de l'autre et/ou
iii) le catalyseur selon le composant (C) est contenu totalement ou au moins partiellement dans au moins l'un des composants (A) ou (B) se trouvant séparément l'un de l'autre, de préférence dans le composant (A).

6. Système d'agent de revêtement selon l'une quelconque des revendications 1 à 5, **caractérisé en ce que**, dans le catalyseur selon le composant (C), l'acide monocarboxylique aliphatique est un acide $C_6$-$C_{18}$-carboxylique, en particulier une octoate de Mg, un octoate de Ca, un octoate de K, un octoate de Bi ou un octoate de Na, un sel de Mg, de Ca, de K, de Na ou de Bi de l'acide $C_{10}$-néodécanoïque et/ou un sel de Mg, de Ca, de K, de Na ou de Bi de l'acide Cg-néononanoïque.

7. Système d'agent de revêtement selon l'une quelconque des revendications 4 à 6, **caractérisé en ce que** le système d'agent de revêtement contient, comme composant supplémentaire, au moins un additif pour vernis (F), de préférence au moins un antimousse.

8. Système d'agent de revêtement selon l'une quelconque des revendications 1 à 7, **caractérisé en ce que** le système d'agent de revêtement se trouve sous forme de mélange complet des composants (A), (B) et (C) ainsi que des composants (D) à (J) le cas échéant présents.

9. Procédé pour la préparation d'un système d'agent de revêtement selon la revendication 8, **caractérisé en ce que** les composants (A), (B) et (C) ainsi que les composants (D) à (J) le cas échéant présents sont préparés séparément les uns des autres et ensuite mélangés les uns avec les autres,
de préférence, le mélange est effectué à température ambiante, les composants (A) et (C) sont mélangés l'un avec l'autre au préalable et/ou le composant (B) est ajouté au composant (A) ou à un mélange contenant le composant (A).

10. Procédé pour la préparation d'un polyuréthane par durcissement au moins partiel ou complet, de préférence par durcissement complet du système d'agent de revêtement selon la revendication 8.

11. Procédé selon la revendication 10, **caractérisé en ce que** le polyuréthane forme une couche ou un revêtement ou est au moins un constituant d'une couche ou d'un revêtement, de préférence la couche ou le revêtement est une couche de vernis.

12. Procédé selon la revendication 10 ou 11, **caractérisé en ce que** le polyuréthane contient au moins un pigment (H) et/ou **en ce que** le polyuréthane est appliqué sous forme de couche sur une couche de vernis de base, qui contient le cas échéant au moins un pigment (H), ou sur un substrat le cas échéant prérevêtu.

13. Procédé selon l'une quelconque des revendications 10 à 12, **caractérisé en ce que** le durcissement du polyuréthane est effectué à des températures de 20 à 80°C, de préférence de 20 à 60°C, la couche de vernis de base facultative ayant le cas échéant été séchée au préalable à des températures de 20°C à 80°C.

14. Utilisation d'un système d'agent de revêtement selon l'une quelconque des revendications 1 à 8 ou d'un polyuréthane qui a été préparé selon un procédé selon l'une quelconque des revendications 10 à 11, comme vernis, lors du laquage d'automobiles, pour la réparation de vernis, pour le laquage de réparation d'automobiles et/ou pour le revêtement de pièces automobiles, de substrats en matériaux synthétiques ou de véhicules utilitaires, de préférence le vernis est un vernis clair ou un vernis pigmenté.

15. Procédé pour la réalisation d'un revêtement, **caractérisé en ce qu'**au moins un système d'agent de revêtement selon l'une quelconque des revendications 1 à 8 est appliqué sur un substrat le cas échéant prérevêtu ou sur une couche de vernis de base.

16. Procédé selon la revendication 15, **caractérisé en ce que** le revêtement comprend un polyuréthane qui est obtenu par durcissement au moins partiel ou complet, de préférence par durcissement complet du système d'agent de revêtement.

17. Utilisation d'au moins deux sels d'un acide monocarboxylique aliphatique comprenant au moins quatre atomes de carbone, le premier sel présentant du bismuth (Bi) en tant que composant métallique et le deuxième sel présentant du magnésium (Mg), du sodium (Na), du potassium (K) ou du calcium (Ca) en tant que composant métallique comme catalyseur dans un système d'agent de revêtement pour la catalyse de la réaction d'uréthane dans un système d'agent de revêtement pour la préparation de polyuréthane, pour la préparation d'un polyuréthane selon l'une quelconque des revendications 10 à 13, pour la réalisation d'un vernis, pour la réparation d'un vernis, pour le laquage de réparation d'automobiles et/ou pour le revêtement de pièces automobiles, de substrats en matériaux synthétiques ou de véhicules utilitaires, le système d'agent de revêtement étant défini selon l'une quelconque des revendications 1 à 8 et comprenant les composants (A) et (B),

(A) représentant au moins un composé contenant des groupes polyhydroxy, l'indice d'acide du composé contenant des groupes polyhydroxy selon le composant (A) n'étant pas supérieur à 15 mg de KOH/g du composé contenant des groupes polyhydroxy correspondant et le composé contenant des groupes polyhydroxy selon le composant (A) étant choisi dans le groupe des polyacrylate-polyols et/ou des polyméthacrylate-polyols,
(B) représentant au moins un composé contenant polyisocyanate.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5011902 A
- WO 2012123198 A1
- WO 2016120160 A
- WO 2016116586 A
- EP 2841200 B
- WO 2005058996 A
- WO 2015130939 A1
- JP 2007246829 A
- US 4598131 A
- US 4939213 A
- US 5084541 A
- EP 0624577 A
- US 20050182189 A1
- WO 9422968 A
- EP 0276501 A
- EP 0249201 A
- WO 9712945 A
- EP 0008127 A
- EP 0692007 A

**In der Beschreibung aufgeführte Nicht-Patentliteratur**

- Replacing a veritable workhorse. *European Coatings Journal,* 07. August 2008
- WERNER J ; BLANK, Z. A. HE ; ED. T. HESSELL. *Catalysis of the Isocyanate-Hydroxyl Reaction by Non-Tin Catalysts,* 09. Oktober 2014, www.werner-blank.com
- Beispiele für solche Verbindungen sind aufgeführt in Poth Schwalm, Schwarz: Acrylatharze. Polymethacrylatpolyole. Vincentz Verlag
- Lacke, Kleb- und Dichtstoffe. **ULRICH MEIER-WESTHUES.** Polyurethane. Vincentz-Verlag, April 2007
- **RÖMPP LEXIKON.** Lacke und Druckfarben. Georg Thieme Verlag, 1998, 250-252
- **THOMAS BROCK ; MICHAEL GROTEKLAES ; PETER MISCHKE.** European Coaatings Handbook. Vincentz Verlag
- **G. W. EHRENSTEIN ; GOTTFRIED W. EHRENSTEIN ; GABRIELA RIEDEL/PIA TRAW-IEL.** *Praxis der thermischen Analyse von Kunststoffen,* 2003